# EUROPÄISCHE PATENTSCHRIFT

(11) **EP 2 240 305 B1**
(45) Veröffentlichungstag und Bekanntmachung des Hinweises auf die Patenterteilung: **29.08.2018**
(21) Anmeldenummer: 09705192.4
(22) Anmeldetag: 30.01.2009
(51) Int. Cl.: B25G 1/10, G01C 3/04, G01S 17/08, G02B 7/12, G02B 23/18, G02B 23/04, F41G 1/38, F41G 3/06

(54) **BEOBACHTUNGSGERÄT MIT ENTFERNUNGSMESSER**
OBSERVATION DEVICE WITH A RANGE FINDER
APPAREIL D'OBSERVATION EQUIPE D'UN TELEMETRE

(30) Priorität: 31.01.2008 AT 1532008; 01.02.2008 AT 1632008; 02.02.2008 EP 08001979; 30.07.2008 US 137406
(43) Veröffentlichungstag der Anmeldung: 20.10.2010
(73) Patentinhaber: Swarovski-Optik KG., 6067 Absam (AT)
(72) Erfinder: MENGES, Dietmar, 6020 Innsbruck (AT); PERNSTICH, Ludwig, 6063 Rum (AT)
(74) Vertreter: Burger, Hannes
(86) Internationale Anmeldenummer: PCT/AT2009/000039
(87) Internationale Veröffentlichungsnummer: WO 2009/094689

(56) Entgegenhaltungen:
- EP-A- 0 932 065
- EP-A- 0 961 147
- EP-A- 1 744 196
- EP-A- 1 783 529
- EP-A1- 0 636 916
- DE-A1- 10 306 282
- DE-A1- 19 801 519
- DE-U1-202006 017 705
- US-A- 5 235 458

## Beschreibung

Die Erfindung betrifft ein fernoptisches Gerät, insbesondere ein Beobachtungsgerät mit zumindest zwei Beobachtungsteilen, entsprechend den Merkmalen der Oberbegriffe der Ansprüche 1 und 2.
Es sind bereits Ferngläser mit einem umgelenkten und in Längserstreckung versetzten Strahlengang bekannt geworden, bei denen die Gelenkbrückenteile jeweils an dem in Richtung auf die gemeinsame Schwenkachse vorragenden Gehäuseteil befestigt sind. Dieser über den Tubus radial vorragende Gehäuseteil dient nur zur Aufnahme der Optik für den Strahlengang.
Das Dokument EP 1 783 529 A1 beschreibt ein fernoptisches Gerät mit mindestens zwei Beobachtungsteilen (Fig. 9), die über zumindest ein Verbindungselement nebeneinander in im Wesentlichen paralleler Lage und in einer (verstellbaren) Distanz zueinander angeordnet sind. Zur Verbindung des Verbindungselementes mit den Beobachtungsteilen ist eine bedarfsweise lösbare Kupplungsvorrichtung vorgesehen.
Das Dokument EP 0636916 A1 ist einer Steuereinrichtung zur Verwendung in optischen Einrichtungen zur Verhinderung von Bildzittern bzw. zur sogenannten Bildstabilisierung gewidmet. Bei einigen der beschriebenen Ausführungsbeispiele wird eine Anwendung in Ferngläsern bzw. binokularen Teleskopen beschrieben. Zwei rohr- bzw. tubusförmige Beobachtungsteile sind dabei um eine mittig angeordnete Achse zur Veränderung des Augenabstands verschwenkbar angeordnet (z.B. Fig. 21). Das beschriebene Fernglas enthält sowohl in den Beobachtungsteilen angeordnete "Zitterdetektoren" als auch Sensoren zur Detektion der Relativbewegung bzw. der Relativstellung der beiden Beobachtungsteile bei einem Verschwenken um die zentrale "Drehzapfenwelle".
Die Aufgabe der Erfindung ist es, ein fernoptisches Gerät zu schaffen, das zur Aufnahme von zusätzlichen Bauteilen im Beobachtungsteil ausgebildet ist.
Die Aufgabe der Erfindung wird durch ein fernoptisches Gerät entsprechend den Merkmalen des Anspruchs 1 gelöst.

Durch die Anordnung der Gehäuseerweiterung, insbesondere an der in der Gebrauchslage unten liegenden Seite, wird eine zusätzliche verbesserte Handhabe für die relative gegenseitige Verstellung der beiden Beobachtungsteile zueinander erleichtert, da eine gezielte Abstützung ermöglicht wird. Damit wird ein mehrfacher Vorteil erzielt, da einerseits in dem Aufnahmeraum der Gehäuseerweiterung zusätzlich am bzw. innerhalb des fernoptischen Geräts ein strahlablenkendes System, das ein Prisma umfasst, angeordnet werden kann und darüber hinaus auch noch die Handhabung für den Benutzer erleichtert wird. Dadurch, dass sich die Gehäuseerweiterung nicht vollständig über die gesamte Länge des Beobachtungsteils erstreckt, bleiben die dem Benutzer zugewendeten Abschnitte in den üblichen Abmessungen unverändert.
Unabhängig davon wird aber die Aufgabe der Erfindung auch durch ein fernoptisches Gerät entsprechend den Merkmalen des Anspruchs 2 gelöst. Dadurch, dass die Gehäuseerweiterung im Querschnitt bezüglich der Längsachse gesehen auf der der Tangente gegenüberliegenden Seite von der gemeinsamen Schwenkachse angeordnet ist, wird ein Bereich festgelegt, der zur Unterstützung der Handhabung dient, jedoch die Verschwenkbarkeit der beiden Beobachtungsteile relativ zueinander nicht behindert. Durch die Anordnung der Gehäuseerweiterung, insbesondere an der in der Gebrauchslage unten liegenden Seite, wird eine zusätzliche verbesserte Hebelwirkung für die gegenseitige Verschwenkung der beiden Beobachtungsteile erleichtert, da eine gezielte Abstützung ermöglicht wird. Damit wird ein mehrfacher Vorteil erzielt, da einerseits verschiedenste Bauteile zusätzlich am bzw. im fernoptischen Gerät angeordnet werden können und darüber hinaus auch noch die Handhabung für den Benutzer erleichtert wird.
Vorteilhaft ist auch eine weitere Ausführungsform nach Anspruch 3, da dadurch in Abhängigkeit von den in der Gehäuseerweiterung aufzunehmenden Bauteilen eine optimale Abstimmung dafür erfolgen kann.
Vorteilhaft ist weiters eine Ausbildung nach Anspruch 4, da dadurch mit geringstem Werkstoffaufwand ein stabiles Außengehäuse geschaffen werden kann und trotzdem die Aufnahme unterschiedlichster Bauteile innerhalb des fernoptischen Gerätes ermöglicht wird.
Durch die Ausbildung nach Anspruch 5 ist es möglich, eine durchgehend stabile Schale zur Bildung der Gehäuseteile bereit zu stellen.
Vorteilhaft ist auch eine Weiterbildung nach Anspruch 6, da dadurch einerseits die Herstellung der Gehäuseteile vereinfacht wird und andererseits eine hohe Variationsmöglichkeit durch die gegeneinander austauschbaren Gehäusebauteile erzielt werden kann.
Bei der Ausgestaltung nach Anspruch 7 ist von Vorteil, dass so gleichzeitig mit der Ankopplung an den Gehäuseteil beispielsweise elektrische Signale oder Energie übertragen werden können.
Durch die Weiterbildung nach Anspruch 8 wird erreicht, dass so ein scharfkantiger Übergang hin zu den beiden Enden des fernoptischen Gerätes vermieden wird und dadurch Anschlagflächen entschärft werden.

Vorteilhaft ist auch eine Ausbildung nach Anspruch 9, da so eine hohe Variationsvielfalt mit den unterschiedlichsten Bauteilen bzw. Bauteilgruppen geschaffen werden kann.

Gemäß einer Ausbildung, wie im Anspruch 10 beschrieben, wird die universelle Einsetzbarkeit des gesamten fernoptischen Gerätes noch zusätzlich erhöht.

Dabei erweist sich eine Ausgestaltung vorteilhaft, bei der ein Datenaustausch zwischen den im fernoptischen Gerät aufgenommenen Bauteilen mit außerhalb davon befindlichen Steuer- und/oder Recheneinheiten bzw. Datenspeichern ermöglicht wird.

Nach einer vorteilhaften Weiterbildung kann eine drahtlose Übermittlung bzw. Übertragung von Daten bzw. Signalen erfolgen.

Von Vorteil ist dabei auch eine Ausbildung nach Anspruch 11, da so auf zusätzliche Leuchtmittel wie Taschenlampen oder Ähnliches verzichtet werden kann und das fernoptische Gerät gleichzeitig als Licht abgebendes Gerät eingesetzt werden kann.

Je nach verwendetem Leuchtmittel kann die Leuchtstärke einfach variiert werden.

Bei der Ausbildung gemäß Anspruch 12 kann eine einfache Ablesbarkeit von angezeigten Daten bzw. Messwerten an der Außenseite des fernoptischen Gerätes erzielt werden.

Vorteilhaft ist die Ausbildung nach Anspruch 13 da dadurch die Handhabbarkeit während dem Beobachtungsvorgang noch ergonomischer gestaltet werden kann und der Daumen geführt in der Daumenvertiefung Platz findet.

Von Vorteil ist aber auch eine Ausbildung nach Anspruch 14, da so zwischen der Gehäuseerweiterung und dem Gehäuseteil eine muldenförmige Ausbildung erzielt werden kann.

Gemäß Anspruch 15 kann mit geringstem Werkstoffaufwand das Auslangen gefunden werden.

Vorteilhaft ist auch eine weitere Ausführungsform nach Anspruch 16, da dadurch einerseits eine exakte Bearbeitung und Ausrichtung des Bauteils erfolgen kann und andererseits beim Zusammenfügen eine exakte gegenseitige Ausrichtung erzielbar ist.

Vorteilhaft ist weiters eine Ausbildung nach Anspruch 18, da dadurch nicht nur eine äußerst stabile Schale geschaffen werden kann, sondern damit auch das Gewicht zusätzlich reduziert werden kann.

Durch die Ausbildung nach Anspruch 19 ist es möglich, das Gehäuse des fernoptischen Gerätes einfach an unterschiedlichste Einsatzbedingungen anpassen zu können.

Nach einer anderen Ausbildungsvariante gemäß Anspruch 20 wird durch die nach außen abfallend ausgebildete Abschrägung eine einfache Handschuhbedienung für die okularseitige Augenmuschel erzielt, wodurch auch bei kälteren Jahreszeiten ein einwandfreier Einsatz des fernoptischen Gerätes möglich ist.

Vorteilhaft ist auch eine Weiterbildung nach Anspruch 17, da so ohne einer Verschwenkbewegung trotzdem eine Veränderung des Augenabstandes zur Anpassung an unterschiedliche Benutzer einfach ermöglicht wird.

Durch die Weiterbildung nach Anspruch 21 wird eine nahezu kippmomentenfreie Halterung des Beobachtungsgeräts während dem Beobachtungsvorgang erzielt. Dadurch kann im Zusammenwirken mit der Daumenausnehmung sowie der daran anschließenden Gehäuseerweiterung ein dem Kippmoment entgegenwirkende Stützkraft erzeugt werden, wodurch ein ruhigerer und verwacklungssicherer Beobachtungsvorgang möglich wird.

Vorteilhaft ist auch eine Ausbildung nach Anspruch 22, da dadurch einzelne Beobachtungsteile für sich alleine mit einer Schusswaffe gekoppelt werden können.

Zum besseren Verständnis der Erfindung wird diese anhand der nachfolgenden Figuren näher erläutert.
Es zeigen jeweils in stark schematisch vereinfachter Darstellung:
- Fig. 1: ein fernoptisches Gerät mit einem vereinfachten Optikschema und einem integrierten Entfernungsmesser in einer Gebrauchslage und einer Ansicht von oben;
- Fig. 2: eine Seitenansicht des fernoptischen Geräts gemäß Pfeil II in Figur 1;
- Fig. 3: eine Ansicht des fernoptischen Geräts gemäß Pfeil III in Figur 1;
- Fig. 4: ein fernoptisches Gerät mit einer alternativen Ausführungsform der Augenweiteneinstellung;
- Fig. 5: eine Ansicht auf das Objektiv des fernoptischen Geräts mit einer weiteren Anordnungsmöglichkeit der Gehäuseerweiterung.

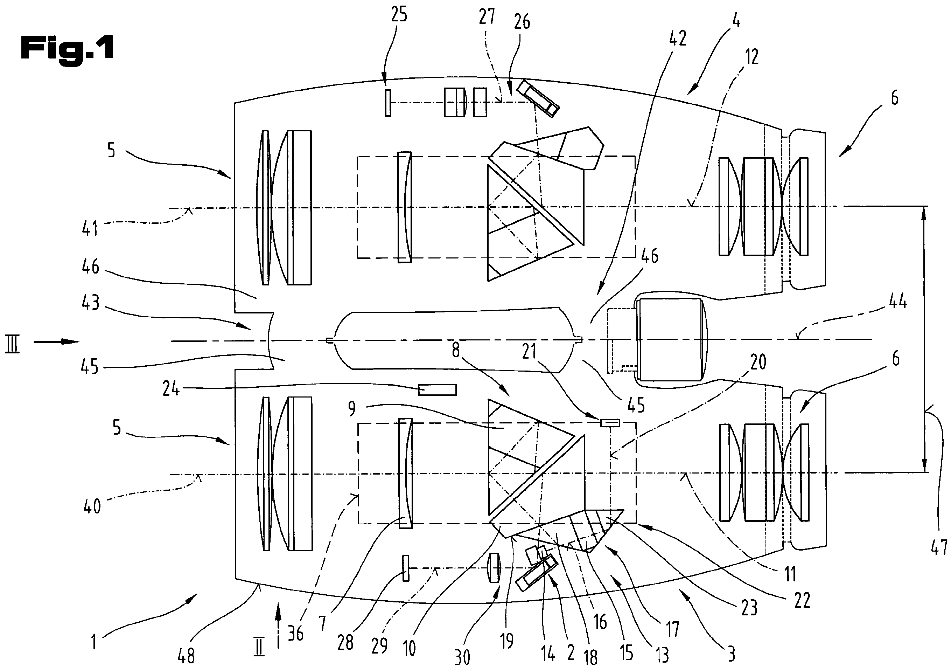

Die Figuren 1 bis 3 zeigen ein Beobachtungsgerät 1, insbesondere ein Fernglas, welches aber auch als fernoptisches Gerät ausgebildet sein kann. Dieses kann auch durch ein Zielfernrohr, einen Theodolit, ein Nivelliergerät, eine Optik für eine Kamera oder einen Fotoapparat oder ähnliches gebildet sein. Dabei wurden die Umrisslinien in dünnen Volllinien dargestellt.
Das Beobachtungsgerät 1 bzw. das fernoptische Gerät umfasst einen ersten Beobachtungsteil 3 und einen zweiten Beobachtungsteil 4, die jeweils für sich genommen eine fernoptische Einrichtung bilden können. Hinsichtlich ihrer optischen Bauelemente sind die beiden Beobachtungsteile 3, 4 gleichartig aufgebaut und umfassen zunächst ein Objektiv 5 und ein Okular 6 zur vergrößerten Darstellung eines beobachteten Objekts. Gemäß diesem Ausführungsbeispiel erfolgt die Scharfstellung durch eine Fokussiereinrichtung 7, die vorzugsweise durch eine Linse gebildet wird. Zur Aufrichtung und seitenrichtigen Darstellung des beobachteten Objekts ist zwischen der Fokussiereinrichtung 7 und dem Okular 6 ein Umkehrsystem 8 angeordnet. Gemäß diesem Ausführungsbeispiel wird das Umkehrsystem 8 durch ein Prismensystem, das ein Dachkantprisma 9 und ein Umlenkprisma 10 umfasst, gebildet. Durch die genannten optischen Bauelemente sind somit ein erster visueller Strahlengang 11 des ersten Beobachtungsteils 3 und ein zweiter visueller Strahlengang 12 des zweiten Beobachtungsteils 4 bestimmt. Zur besseren Übersichtlichkeit sind die Strahlengänge 11 und 12 jeweils nur durch die entsprechenden Hauptstrahlen bzw. die entsprechenden optischen Achsen der Beobachtungsteile 3 und 4 symbolisiert und vereinfacht dargestellt.

Unabhängig davon wäre es aber auch noch möglich, dass in nur einem der beiden Beobachtungsteile 3, 4 die zuvor beschriebenen optischen Bauelemente zur Bildung des visuellen Strahlengangs 11, 12 angeordnet sind und innerhalb des weiteren Beobachtungsteils 4, 3 davon unterschiedliche Bauelemente bzw. Bauteile aufgenommen sind, welche nachfolgend noch näher beschrieben werden.

Für die Entfernungsmessung umfasst der erste Beobachtungsteil 3 auch ein Sendeoptiksystem 13 mit einem Lasersender 14 und einer Senderoptik 15. Der Lasersender 14 ist derart in den ersten Beobachtungsteil 3 integriert, dass ein Teil eines Strahlengangs 16 des Lasersenders 14 in den ersten visuellen Strahlengang 11 umgelenkt ist. Zur Umlenkung des Strahlengangs 16 des Lasersenders 14 sind in dem ersten Beobachtungsteil 3 optische Bauelemente vorgesehen, die gemäß diesem Ausführungsbeispiel durch ein Umlenkprisma 17 und ein Teilerprisma 18 gebildet sind. Das Teilerprisma 18 ist dazu an der dem Dachkantprisma 9 gegenüberliegende Fläche 19 des Umlenkprismas 10 angeordnet bzw. an der Fläche 19 des Umlenkprismas 10 mit diesem verbunden. Die Fläche 19 bildet einen Strahlenteiler in dem an dieser eine teildurchlässige Beschichtung vorgesehen ist. Durch diese Beschichtung der Fläche 19 erfolgt an dieser eine Reflexion des visuellen Strahlengangs 11, wohingegen das Licht des Lasersenders 14 nicht reflektiert wird und ungehindert durch die Fläche 19 hindurch tritt. Die Vereinigung des optischen Strahlengangs 16 des Lasersenders 14 mit dem ersten visuellen Strahlengang 11 ist somit an der Fläche 19 des Umlenkprismas 10 bzw. des Teilerprismas 18 lokalisiert. Dazu ist vorgesehen, dass die Richtung des Strahlengangs 16 des Lasersenders und die Richtung des ersten visuellen Strahlengangs 11 in seinem objektivseitigen Verlauf im Bereich bzw. im inneren des Umlenkprismas 10 gleich gerichtet sind. In dem der Strahlengang 16 des Lasersenders 14 in seinem Verlauf auf das Objekt hin auch die Fokussiereinrichtung 7 und das Objektiv 5 passiert, kann der Lasersender 14 bzw. der Strahlengang 16 des Lasersenders auf dem Objekt bzw. in der Objektebene fokussiert werden.

Nach der Reflexion des Laserlichts an einem entfernten Objekt treten reflektierte Laserstrahlen gemeinsam durch den ersten visuellen Strahlengang 11 wieder in das Beobachtungsgerät 1 ein. Bedingt durch die teildurchlässige Beschichtung der Fläche 19 zwischen dem Umlenkprismas 10 und dem Teilerprisma 18 erfolgt an dieser Fläche 19 eine Trennung eines Strahlengangs 20 des Laserempfängers von dem ersten visuellen Strahlengang 11. Zur Detektion bzw. Messung der reflektierten Laserstrahlung ist ein Empfänger 21 vorgesehen, wobei das Laserlicht dazu durch ein Empfangsoptiksystem 22 geführt ist, welches gemäß diesem Ausführungsbeispiel durch das Teilerprisma 18 und ein Empfängerprisma 23 gebildet ist. In dem der erste visuelle Strahlengang 11 und der Strahlengang 20 des Laserempfängers an der Fläche 19 zwischen dem Umlenkprisma 10 und dem Teilerprisma 18 vereinigt bzw. aufgespalten sind, ist somit auch ein Teil des Strahlengangs 20 des Laserempfängers in den ersten visuellen Strahlengang 11 integriert. Somit sind bei diesem Beobachtungsgerät 1 mit einem Laser-Entfernungsmesser 2 zur Integration des Strahlengangs 16 des Lasersenders 14 und des Strahlengangs 20 des Laserempfängers 21 in den ersten visuellen Strahlengang 11 optische Bauelemente angeordnet, in denen ein Übergang zwischen dem ersten visuellen Strahlengang 11 und dem Strahlengang 16 des Lasersenders 14 bzw. dem Strahlengang 20 des Laserempfängers 21 erfolgt. Gemäß dem beschriebenen Ausführungsbeispiel ist darüber hinaus der Bereich des Übergangs an einem einzigen optischen Bauelement und zwar der Fläche 19 des Umlenkprismas 10 lokalisiert. Es erfolgt somit die Einleitung der Laserstrahlung des Lasersenders 14, als auch die Abtrennung der reflektierten Laserstrahlung von dem ersten visuellen Strahlengang 11 an der einzigen Fläche 19.

Die Entfernungsmessung erfolgt in der an sich bekannten Weise, basierend auf dem Prinzip der Laufzeitmessung eines Laserimpulses bzw. einer Laserimpulsfolge die vom Lasersender 14 ausgesendet wird. Aus dem Verhältnis der Zeitdifferenz zwischen einem ausgesandten Laserimpuls und dem eintreffenden reflektiertem Laserlicht bezogen auf die Lichtgeschwindigkeit ergibt sich sodann die Entfernung des anvisierten Objektes. Der Eintreffzeitpunkt des reflektierten Lasersignals wird durch den Empfänger 21 detektiert. Zur Berechnung und Steuerung der Funktionen des Beobachtungsgerätes 1 ist eine Steuer- und Auswerteeinheit 24 vorgesehen. Der in der Steuereinheit 24 schließlich errechnete Wert der Entfernung kann für den Beobachter im Gesichtsfeld dargestellt werden, in dem in einem der beiden Beobachtungsteile 3, 4 ein Anzeigeelement 25 mit einer entsprechenden Anzeigeoptik 26 vorgesehen ist. Die Anzeigeoptik 26 ist gemäß diesem Ausführungsbeispiel in dem zweiten Beobachtungsteil 4 derart angeordnet, dass der Strahlengang 27 der Anzeigeoptik 26 in dem okularseitigen Teil des zweiten visuellen Strahlengangs 12 integriert ist. Der Bereich des Übergangs des Strahlengangs 27 der Anzeigeoptik 26 in den zweiten visuellen Strahlengang 12 ist wie bereits für das Umkehrsystem 8 des ersten Beobachtungsteil 3 beschrieben an einer teilreflektierenden Oberfläche eines Prismas lokalisiert.

Zur Erleichterung des Anvisierens eines zu beobachtenden Objektes zu welchem die Entfernung gemessen werden soll, ist in dem ersten Beobachtungsteil 3 darüber hinaus eine Zielmarke 28 vorgesehen. Die Zielmarke 28 bzw. ein Strahlengang 29 der Zielmarke 28 wird über eine dazu vorgesehene Zielmarkenoptik 30 in dem okularseitigen Teil des ersten visuellen Strahlenganges 11 überführt. Der Bereich des Übergangs des Strahlengangs 29 der Zielmarke 28 ist dabei ebenfalls an der zwischen dem Umlenkprisma 10 und dem Teilerprisma 18 liegenden Fläche 19 lokalisiert.

Gemäß einer alternativen Ausführungsform ist es auch möglich, neben dem Strahlengang 29 der Zielmarke 28 auch den Strahlengang 27 des Anzeigeelements 25 in dem ersten Beobachtungsteil 3 des Beobachtungsgeräts 1 zu integrieren. Umgekehrt wäre es aber auch möglich, das Anzeigeelement 25 selbst zur Erzeugung der Zielmarke 28 zu verwenden.

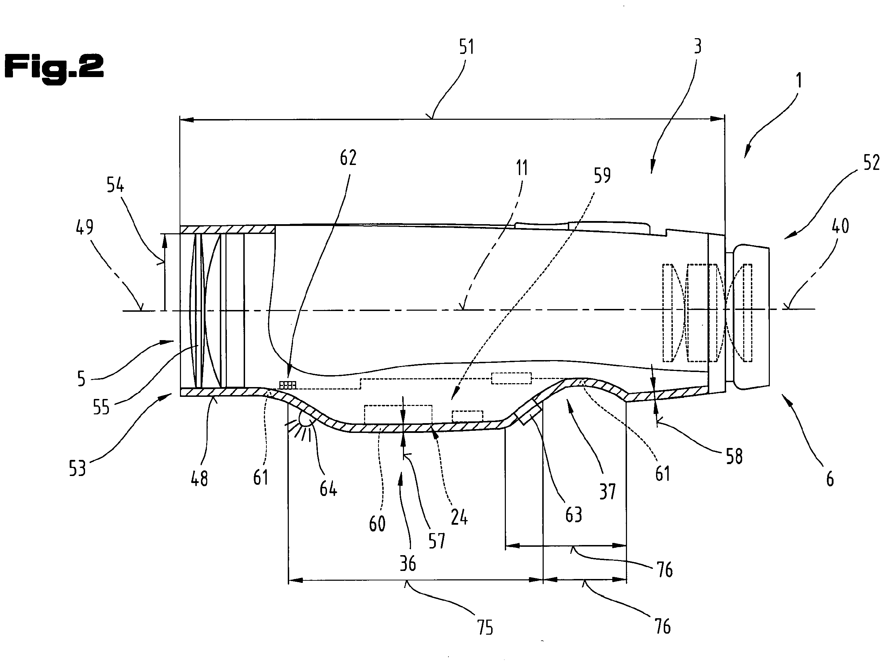

Die Figur 2 zeigt eine Seitenansicht des Beobachtungsgerätes 1 bzw. des fernoptischen Geräts gemäß Figur 1. Darstellungsgemäß weisen die Beobachtungsteile 3, 4 eine annähernd tubusartige Grundform auf. In einem unteren Bereich des Beobachtungsteils 3, 4 umfasst dieser eine kielartig ausgeformte Gehäuseerweiterung 36. In einem daran anschließenden, dem Okular 6 zugewandten Bereich des Beobachtungsteils 3, 4 ist außerdem eine Daumenvertiefung 37 ausgebildet. Die Gehäuseerweiterung 36 bildet einen inneren Aufnahmebereich für die Vorrichtungselektronik insbesondere für die Steuer- und Auswerteeinheit 24. Andererseits weist die äußere Form der Gehäuseerweiterung 36 und der Daumenvertiefung 37 eine besonders günstige ergonomische Ausformung bzw. Griffgestaltung auf, sodass ein bequemes Halten des Beobachtungsgeräts 1 in an dem Handballen anliegender Weise gewährleistet ist. Darüber hinaus hat diese Formgebung auch noch den Vorteil einer verbesserten Hebelwirkung insoweit eine Verschwenkung der beiden Beobachtungsteile 3, 4 des Beobachtungsgeräts 1 erleichtert wird. Ebenso wird die Augenweiteneinstellung im Falle einer linearen Verschiebung der Beobachtungsteile 3, 4 zueinander begünstigt.

Bei diesem hier gezeigten Ausführungsbeispiel sind die beiden Beobachtungsteile 3, 4 aus vereinfacht dargestellten Gehäuseteilen 38, 39 gebildet und erstrecken sich zwischen dem Okular 6 bzw. der Okularseite und dem Objektiv 5 bzw. der Objektivseite. Weiters definieren die Gehäuseteile 38, 39 zwischen der Okularseite 6 und der Objektivseite 5 jeweils eine Längsachse 40, 41. Bei zentrischem Einbau der optischen Bauteile, insbesondere des Objektivs 5 und des Okulars 6, können zum größten Teil die Längsachsen 40, 41 deckungsgleich zum ersten und/oder zweiten visuellen Strahlengang 11, 12 verlaufen. Der erste und/oder der zweite visuelle Strahlengang 11, 12 kann einen Beobachtungsstrahlengang ausbilden, der seinerseits eine optische Achse definiert bzw. ausbildet.

Um ein nahezu bzw. vollständig kippmomentfreies Abstützen des Beobachtungsgeräts 1, insbesondere der beiden Beobachtungsteile 3, 4, während dem Beobachtungsvorgang zu erreichen, ist es vorteilhaft, wenn der Schwerpunkt des Beobachtungsgeräts 1 im Längsschnitt bezüglich der Längsachse 40, 41 gesehen, in einem Längsabschnitt 76 angeordnet ist, welcher zumindest dem Abschnitt der Daumenvertiefung 37 in der gleichen Richtung entspricht. Durch die unmittelbare und nachfolgende Anordnung der Gehäuseerweiterung 36 mit dem schräg verlaufenden Übergangsbereich, kann dieser Längsabschnitt 76 hin in Richtung auf die Objektivseite 5 zusätzlich vergrößert werden. Liegt der Schwerpunkt, welcher maßgeblich durch die optischen Bauteile innerhalb des Beobachtungsgeräts 1 bzw. der Beobachtungsteile 3, 4 bestimmt wird, außerhalb dieses Bereiches hin in Richtung auf die Objektivseite 5 liegt, kann so das auftretende Kippmoment entweder durch eine ausreichende Klammerhaltung der Hand oder aber auch durch Abstützung der Okularseite 6 an dem die obere Augenhöhle begrenzenden Stirnbein erfolgen. Eine sinnvolle Kombination kann dabei je nach Beobachtungsvorgang gewählt werden. Durch die an die Geometrie des Daumens angepasste Daumenvertiefung 37 in Verbindung mit dem schräg verlaufenden Übergang hin zur Gehäuseerweiterung 36, kann auch hier noch eine zusätzliche Abstützwirkung erzielt werden.

Weiters sind bei diesem hier gezeigten Ausführungsbeispiel die beiden Beobachtungsteile 3, 4 über zumindest ein bevorzugt jedoch mehrere Verbindungselemente 42, 43 nebeneinander in einer im Wesentlichen parallelen Lage sowie in einer Distanz zueinander angeordnet. Das oder die Verbindungselemente 42, 43 können in bekannter Weise durch jeweils eine hier vereinfacht dargestellte Gelenkbrücke gebildet sein, welche eine Schwenkachse 44 ausbilden bzw. definieren. Die Gelenkbrücke kann ihrerseits Gelenkbrückenteile 45, 46 umfassen, welche in den einander zugewendeten Endbereichen die gemeinsame Schwenkachse 44 bilden und an den davon abgewendeten Enden jeweils mit dem Beobachtungsteil 3, 4 bzw. dessen Gehäuseteil 38, 39 verbunden sind. Bevorzugt sind die Gelenkbrückenteile 45, 46 jeweils integraler Bestandteil des Beobachtungsteils 3, 4, insbesondere dessen Gehäuseteil 38, 39. Wird das Gehäuseteil 38, 39 beispielsweise durch einen Präzisionsgießvorgang hergestellt, können diese gleichzeitig mit dem Herstellvorgang der Gehäuseteile 38, 39 ausgebildet und so gleich daran angeformt sein.

In einer üblichen Gebrauchslage des Beobachtungsgeräts 1 bzw. des fernoptischen Geräts sind die Längsachsen 40, 41 der Beobachtungsteile 3, 4 im Bereich der Okularseiten 6 in einem Abstand 47 voneinander distanziert angeordnet. Dieser Abstand 47 kann auch als so genannter Augenabstand bezeichnet werden, der in der Augenheilkunde mit dem Abstand der Pupillenmittelpunkte der beiden Augen gleichzusetzen ist. Der Augenabstand beträgt derzeit beim Menschen durchschnittlich 62 mm (bei Männern) und variiert auch zwischen stark unterschiedlichen Konstitutionstypen und Körpergrößen nur sehr geringfügig. Bei Frauen kann der Augenabstand etwas geringer sein und beispielsweise 54 mm betragen. Unterhalb dieses Abstandes 47 von 54 mm liegen dann noch ca. 5 % an Frauen. Der Abstand 47 ist hier auf die Längsachsen 40, 41 der Beobachtungsteile 3, 4 bezogen wobei bei zentrischem Einbau des Okulars 6 dies der optischen Achse des Strahlengangs 11 und/oder 12 im Bereich des Okulars 6 entspricht. Diese Gebrauchslage bzw. Stellung dient zur weiteren Definition der Anordnung der Gehäuseerweiterung 36 an einer Außenseite 48 des Beobachtungsteils 3, 4 bzw. Gehäuseteils 38, 39. So kann beispielsweise der Abstand 47 einen Wert in einer unteren Grenze von 52 mm und einen Wert mit einer oberen Grenze von 66 mm aufweisen. Dabei spielt der Abstand 47 lediglich bei zueinander winkelig verschwenkbaren Beobachtungsteilen 3, 4 eine wesentliche Rolle, da durch die Schwenkbewegung sich die Lage von den an der Außenseite 48 angeordneten Bauelementen, wie beispielsweise der Gehäuseerweiterung 36, relativ zueinander bzw. auch bezüglich der Schwenkachse 44 verändert.

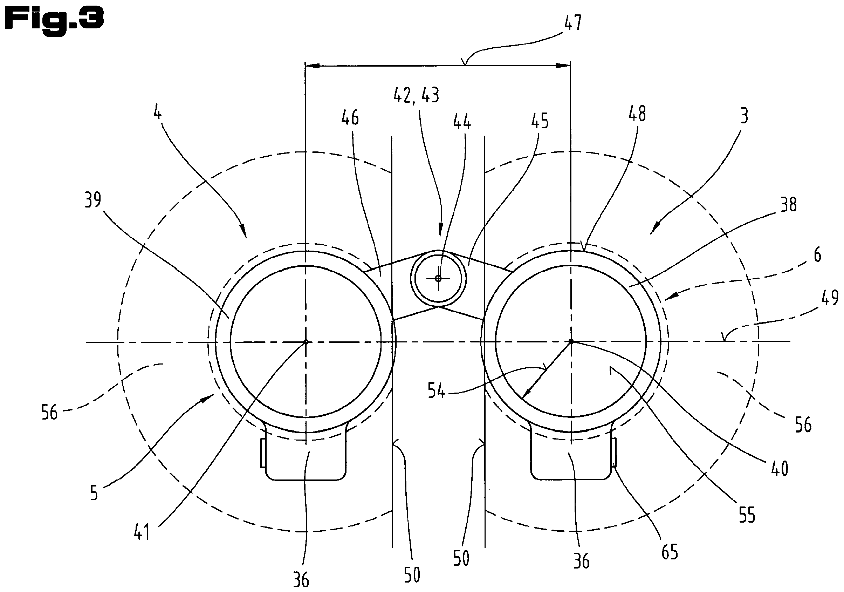

Die Längsachsen 40, 41 bzw. die optischen Achsen der beiden Beobachtungsteile 3, 4 definieren bei dem zuvor beschriebenen Abstand 47 eine in den beiden Längsachsen 40, 41 liegende Bezugsebene 49, wie dies am besten aus der Fig. 3 zu ersehen ist. Damit spannen die beiden Längsachsen 40, 41 die Bezugsebene 49 auf. An der der Schwenkachse 44 bzw. dem Verbindungselement 42, 43 zugewendeten Seite ist eine vereinfacht dargestellte Tangentialebene 50 dargestellt, welche somit an der dem weiteren Beobachtungsteil 4 zugewendeten Seite am ersten Beobachtungsteil 3 tangential am Gehäuseteil 38 angeordnet ist. Dadurch ist die Tangentialebene 50 auch senkrecht bezüglich der Bezugsebene 49 sowie zumeist parallel bezüglich der Längsachse 40 ausgerichtet.
Aus einer Zusammenschau der Fig. 2 und 3 ist die Anordnung und Ausbildung der zuvor beschriebenen Gehäuseerweiterung 36 am besten zu ersehen. So ist in der Fig. 3 eine im Bereich des hier rechts angeordneten Beobachtungsteils 3 gezeigt.
Die Gehäuseerweiterung 36 überragt hier die äußere Oberfläche des Gehäuseteils 38, 39 im Bereich von dessen Außenseite 48, wobei das Gehäuseteil 38, 39 zumeist ein tubus- bzw. rohrförmig ausgebildeter Bauteil ist. Die Gehäuseerweiterung 36 weist ihrerseits wiederum Oberflächenpunkte auf, wobei diese derart angeordnet sind, dass sich diese innerhalb eines Teilabschnittes in einer unteren Grenze von 20 % und einer oberen Grenze von 80 % von einer Gesamtlänge 51 des Beobachtungsteils 3, 4 bzw. des fernoptischen Gerätes zwischen einem okularseitigen Ende 52 und einem objektivseitigen Ende 53 befinden. Diesem hier gezeigten Teilabschnitt der Gehäuseerweiterung 36 wurde das Bezugszeichen 75 für seine Längserstreckung zugeordnet. Dabei kann die Anordnung des Bereiches bevorzugt in etwa mittig bezüglich der Gesamtlänge 51 des Beobachtungsteils 3, 4 erfolgen. Es wäre aber auch eine gezielte Annäherung an die Objektivseite 5 und/oder Okularseite 6 möglich, wodurch eine gezielte Verlagerung des Schwerpunktes bezüglich der Längsachse 40, 41 gesehen im Hinblick auf die kippmomentenfreie Abstützung ermöglicht wird.
Die Längserstreckung der Gehäuseerweiterung 36 ist in der Fig. 2 vereinfacht dargestellt. So kann die Gehäuseerweiterung 36 im Längsschnitt bezüglich der Längsachse 40, 41 des Beobachtungsteils 3, 4 einen kielartig ausgebildeten Querschnitt aufweisen. Dabei überragt die Gehäuseerweiterung 36 die zumeist rohr- bzw. tubusförmige Außenseite 48 auf die von der Längsachse 40, 41 abgewendete Seite. Diese kielartige bzw. auch als finnenartig zu bezeichnende Ausbildung kommt dann zu Stande, wenn ausgehend von der höchsten Erhebung der Gehäuseerweiterung 36 diese auf die Objektiv- bzw. Okularseite 5, 6 hin abfallend und somit winkelig bezüglich der Längsachse 40, 41 ausgerichtet ist.
Die zuvor beschriebenen Oberflächenpunkte der Gehäuseerweiterung 36 können dabei in einem Normalabstand auf die optische Achse des Objektivs 5 bezüglich einem Radius 54 einer Linse 55 des Objektivs 5 in einer unteren Grenze von 130 % und einer oberen Grenze von 250 % angeordnet sein. Je nach Wandstärke der Gehäuseteile 38, 39 mit den zusätzlich daran angeordneten und nachfolgend noch beschriebenen Schutzelementen kann der Wertebereich des Radius 54 sowohl auch noch kleiner aber auch größer sein, als die zuvor angegebenen Grenzen. So kann z.B. die untere Grenze auch noch bei 110 % bzw. 120 % liegen. Dies kommt dann zum Tragen, wenn Beobachtungsgeräte 1 mit einem kleineren Objektivdurchmesser verwendet werden. Der Radius 54 kann aber auch durch den freien bzw. lichten Durchmesser des Objektivs festgelegt und somit auf diesen bezogen werden. Gemäß der Erfindung, liegen jene Oberflächenpunkte, welche den größten Radialabstand bezüglich der Längsachse 40, 41 aufweisen, innerhalb der zuvor beschriebenen Grenzen. Der Radius 54 der Linse 55 ist dabei zumeist gleich und/oder kleiner einer Innenabmessung des Gehäuseteils 38, 39 im Bereich des objektivseitigen Endes 53. Die Angabe des Radius 54 bezieht sich im Zusammenwirken mit der Linse 55 bevorzugt auf den Grundkörper zur Aufnahme der optischen Bauteile, wobei die den Grundkörper bildenden Gehäuseteile 38, 39 zu deren Schutz zumindest bereichsweise, bevorzugt jedoch vollständig mit zumindest einem Hüllelement umgeben sein können. Darüber hinaus können auch noch weitere Schutzteile bzw. Schutzhüllen am Grundkörper angeordnet sein. Dies können z.B. Schutzkappen sowie röhrförmige Schutzelement im Bereich der Objektivseite 5 und/oder Okularseite 6 sein. All diese zuvor genannten Schutzelemente dienen nicht nur zum Schutz gegen Schläge sowie Kratzer, sondern können auch zur zusätzlichen Versteifung des gesamten Grundkörpers, insbesondere der Gehäuseteile 38, 39, dienen. Je dicker bzw. stärker die Schutzteile bezogen auf den Radius 54 sind, desto mehr soll auch die Gehäuseerweiterung 36 den Grundkörper bzw. die Gehäuseteile 38, 39 überragen. Das Hüllelement wird bevorzugt derart angeordnet, dass dieses auch die Gehäuseerweiterung 36 abdeckt und kann sowohl einstückig als auch mehrteilig aus den unterschiedlichst bekannten Werkstoffen gebildet sein.
Umfänglich bezüglich der Längsachse 40 bzw. der optischen Achse des Objektivs 5 gesehen, kann die Gehäuseerweiterung 36 ihrerseits in einem Kreisringabschnitt 56 angeordnet sein, welcher sich in radialer Richtung gesehen in den zuvor beschriebenen Grenzen erstreckt und jeweils an der ebenfalls zuvor beschriebenen Tangentialebene 50 auf der dem weiteren Beobachtungsteil 4 zugewendeten Seite endet. Somit erstreckt sich der Kreisringabschnitt 56 ausgehend von der Tangentialebene 50 bezüglich der optischen Achse des Objektivs 5 über die gesamte vom weiteren Beobachtungsteil 4 abgewendete Seite des ersten Beobachtungsteils 3. Die dem zweiten Beobachtungsteil 4 zugeordnete weitere Tangentialebene 50 ist spiegelbildlich bezüglich der Schwenkachse 44 am zweiten Beobachtungsteil 4 angeordnet bzw. ausgerichtet. Die Gehäuseerweiterung 36 des zweiten Beobachtungsteils 4 ist bevorzugt in den gleichen zuvor beschriebenen Grenzen angeordnet bzw. ausgebildet und erstreckt sich wiederum ausgehend von der dem zweiten Beobachtungsteil 4 zugeordneten Tangentialebene 50 über die vom ersten Beobachtungsteil 3 abgewendete Seite.

Damit ist die Anordnungsmöglichkeit der Gehäuseerweiterung 36 in den zuvor beschriebenen Grenzen bzw. Bereichen festgelegt. Die umfängliche Erstreckung der Gehäuseerweiterung 36 selbst, kann sich nur über einen Teilbereich des Kreisringabschnittes 56 bis hin über den gesamten Kreisringabschnitt 56 erstrecken. Diese Erstreckung kann im Querschnitt bezüglich der Längsachse 40 bzw. 41 des Beobachtungsteils 3 bzw. 4 beispielsweise in einer unteren Grenze von 5° und einer oberen Grenze von 270° liegen.

Da es sich bei dem Beobachtungsteil 3, 4 zumeist um einen im Gieß- bzw. Spritzverfahren hergestellten Gehäuseteil 38, 39 handelt, ist es vorteilhaft, wenn die Gehäuseerweiterung 36 eine Wandstärke 57 aufweist, welche in etwa einer Wandstärke 58 des Gehäuseteils 38 bzw. 39 entspricht. Die Wandstärkenangaben beziehen sich dabei ausschließlich auf den bevorzugt metallenen Gehäuseteil 38, 39 sowie die Gehäuseerweiterung 36 ohne zusätzlicher Deck- bzw. Schutzschichten. Dadurch wird durch die Gehäuseerweiterung 36 an einer der Längsachse 40 bzw. 41 zugewendeten Innenseite ein Aufnahmeraum 59 ausgebildet. Die Gehäuseerweiterung 36 kann beispielsweise selbst integraler Bestandteil des Gehäuseteils 38 bzw. 39 sein, wie dies in vollen Linien in Fig. 2 dargestellt ist.

Unabhängig davon wäre es aber auch möglich, die Gehäuseerweiterung 36 durch einen separaten und mit dem Gehäuseteil 38 bzw. 39 zu kuppelnden Gehäusebauteil 60 zu bilden. Zur Erzielung einer Dichtheit des gesamten Gehäuseteils 38 bzw. 39 mit dem kuppelbaren Gehäusebauteil 60 kann ein vereinfacht dargestelltes Dichtelement 61 vorgesehen sein. Dieses Dichtelement 61 kann nicht nur zur sicheren Abdichtung mit ersten bzw. zweiten Beobachtungsteil 3, 4 und der darin aufgenommenen Optik bzw. der zuvor beschriebenen weiteren Bauteile dienen, sondern gleichzeitig auch eine Arretier- bzw. Kupplungsfunktion übernehmen. Bevorzugt wird das Dichtelement 61 über den gesamten Umfang des Gehäusebauteils 60 ununterbrochen durchlaufend ausgebildet. Dabei kann das Dichtelement 61 entweder als eigenständiger Bauteil ausgebildet sein, oder aber auch ein an der Gehäuseerweiterung 36 und/oder dem Gehäuseteil 38 bzw. 39 angeordneter, insbesondere daran angeformter Bauteil sein. Der Gehäusebauteil 60 könnte aber auch über den gesamten Kreisringabschnitt 56 umfänglich ausgebildet sein, wobei jedoch die Gehäuseerweiterung 36 im Querschnitt gesehen nur einen Teilbereich davon ausmacht. Dies bedeutet, dass der Gehäusebauteil 60 als abnehmbares Bauteil ausgebildet ist, welches sich über den Querschnitt in den vorgegebenen Grenzen erstreckt, jedoch die Gehäuseerweiterung 36 dazu kürzer ausgebildet ist. Damit können gleichartige Gehäuseteile 38, 39 zur Aufnahme des Gehäusebauteils 60 ausgebildet werden und je nach dem verwendeten Gehäusebauteil 60 mit der daran angeordneten Gehäuseerweiterung 36 eine unterschiedliche Anordnung bezüglich des Gehäuseteils 38, 39 erzielt werden.

Ist ein kuppelbarer und bedarfsweise abnehmbarer Gehäusebauteil 60 zur Bildung der Gehäuseerweiterung 36 vorgesehen, kann auch eine entsprechende jedoch nicht näher dargestellte Schutzabdeckung des ersten bzw. zweiten Beobachtungsteils 3, 4 eine dem Dichtelement 61 entsprechende Umrissform aufweisen, um ein problemloses Abnehmen bzw. erneutes Kuppeln zu ermöglichen.

Es wäre aber auch ein nicht näher dargestelltes durchlaufendes Abdeckelement denkbar, welches zur Durchführung des Abnahmevorgangs bzw. Kuppelvorgangs vom Gehäuseteil 38 bzw. 39 abnehmbar bzw. wegklappbar ausgebildet ist und nach erfolgter Manipulation wieder dichtend über die Gehäuseerweiterung 36 dichtend darüber angeordnet werden kann.

Das Beobachtungsteil 3 bzw. 4, insbesondere dessen Gehäuseteil 38, 39 wird bevorzugt durchgängig nahezu mit der gleichen einheitlichen Wandstärke 58 ausgebildet, wobei diese eine untere Grenze von 0,5 mm und einer oberen Grenze von 1,5 mm liegen kann. Diese Werte beziehen sich auf Gehäuseteile 38, 39 bzw. den Gehäusebauteil 60, wenn dieser aus einem Leichtmetallwerkstoff wie Magnesium oder eine Magnesium enthaltende Legierung gebildet ist. Es wäre aber auch möglich das Beobachtungsteil 3, 4, insbesondere dessen Gehäuseteile 38 bzw. 39, sowie gegebenenfalls den Gehäusebauteil 60 aus einem faserverstärkten Kunststoff zu bilden, wobei einzelne der Fasern aus der Gruppe von Glasfasern, Aramidfasern, Kohlenstofffasern, Metallfasern, Keramikfasern oder Polyimidfasern gewählt sein können. Diese zuvor angegebenen Grenzen für die Wandstärke 58 beziehen sich ausschließlich auf die der Gehäuseteile 38 ,39 ohne daran angeordneten zusätzlichen Schutz- bzw. Hüllelementen. Diese würden zusätzlich die gesamte Wanddicke erhöhen.

Wie nun weiters am besten aus der Fig. 2 zu ersehen ist, ist zwischen der Gehäuseerweiterung 36 und der Okularseite 6 am Beobachtungsteil 3 bzw. 4 eine Daumenvertiefung 37 ausgebildet. Bei horizontaler Lage bzw. Ausrichtung der Bezugsebene 49 ist die bzw. sind die Daumenvertiefungen 37 an der Unterseite des Beobachtungsgeräts 1, insbesondere des fernoptischen Geräts, angeordnet bzw. ausgebildet. Dabei erstreckt sich die Daumenvertiefungen 37 im Längsschnitt bezüglich der Längsachse 40, 41 des Beobachtungsteils 3, 4 gesehen innerhalb des Querschnitts des rohrförmig ausgebildeten Gehäuseteils 38, 39 hinein. Damit ragt die Daumenvertiefung 37, insbesondere jener Wandteil des Gehäuseteils 38, 39, in den Innenraum des Beobachtungsteils 3, 4 vor.

Die Daumenvertiefung 37 dient dazu, ein gutes Griffverhalten und damit verbunden eine sichere Handhabung des fernoptischen Geräts sicher zu stellen. Dies gilt nicht nur für jene Zeit während des Beobachtungsvorganges sondern auch bereits während dem Tragen bzw. Halten mit einer Hand, da sich gerade der Daumen in dieser Mulde bzw. Vertiefung besser abstützen und positionieren kann. Die Daumenvertiefung 37 kann auch weiters noch dazu dienen, die Umfassungsdicke des Beobachtungsgeräts 1 bzw. fernoptischen Geräts zu verringern, um auch für Personen mit kleineren Händen, insbesondere Daumen und Zeigefinger, eine sichere Halterung zu ermöglichen.

Die Daumenvertiefung 37 kann sich umfänglich gesehen bezüglich der Längsachse 40, 41 auch noch über einen gewissen Winkelbereich ausgehend von der Unterseite und bei horizontaler Anordnung der Bezugsebene 49 bevorzugt beidseits in Richtung auf die Bezugsebene 49 hin erstrecken.

Der durch die Gehäuseerweiterung 36 ausgebildete Aufnahmeraum 59 innerhalb des ersten bzw. zweiten Beobachtungsteils 3, 4 kann seinerseits zur Aufnahme einzelner unterschiedlichster Bauteile bzw. Baugruppen dienen, wobei diese aus der Gruppe von strahlformende Systeme, strahlablenkenden Systeme Entfernungsmesseinrichtung, Navigationssystem wie GPS (global positioning system), Fernübertragungsmittel wie W-LAN, Bluetooth, Infrarot, Laser und Funk, Energieerzeugungsvorrichtung, Energiespeicher bzw. Energiespeichervorrichtungen mit zumindest einem elektrischen Energiespeicher, welcher als primäres oder sekundäres Speicherelement ausgebildet sein kann, Wärmebildgeräte und mobile Kommunikationseinrichtungen gewählt sein können. Gemäß der Erfindung umfasst der Aufnahmeraum zumindest ein strahlablenkendes System, welches ein Prisma umfasst. Als strahlformendes System kann beispielsweise ein Lasersender oder ein Projektor dienen. Einige dieser Bauteile sind in strichlierten Linien in der Fig. 2 schematisch vereinfacht dargestellt.
Um eine Verbindung mit dem oder den im Aufnahmeraum 59 angeordneten Bauteilen und/oder mit den zuvor detailliert in der Fig. 1 beschriebenen Baugruppen herstellen zu können, ist es vorteilhaft, wenn zwischen dem kuppelbaren Gehäusebauteil 60 der Gehäuseerweiterung 36 und dem Gehäuseteil 38 bzw. 39 eine koppelbare Steckverbindung 62 angeordnet ist. Diese Steckverbindung 62 ist vereinfacht in strichlierten Linien in der Fig. 2 an der dem Objektiv 5 zugewendeten Seite der Gehäuseerweiterung 36 sowie innen liegend angedeutet.
Um eine Kommunikationsverbindung mit den unterschiedlichen zuvor beschriebenen und im Aufnahmeraum 59 angeordneten Bauteilen herstellen zu können, kann an der Gehäuseerweiterung 36 eine Kommunikationsschnittstelle oder ein Anschluss für eine Energieversorgungsvorrichtung bzw. eine Energieversorgungseinheit angeordnet sein. Dies ist jedoch der Übersichtlichkeit halber nicht näher detailliert dargestellt. So kann beispielsweise die Kommunikationsschnittstelle aus der Gruppe von USB, IEEE 1394 (Firewire) oder RS 232 gewählt sein.
Zusätzlich kann es auch noch vorteilhaft sein, wenn an und/oder in der Gehäuseerweiterung 36 eine Sende- und/oder Empfangseinrichtung 63 für das oder die im Aufnahmeraum 59 angeordneten Bauteile vorgesehen bzw. angeordnet ist. Unabhängig davon könnte aber auch an der Gehäuseerweiterung 36 ein Leuchtmittel 64 vorgesehen bzw. angeordnet sein. Dieses Leuchtmittel 64 kann beispielsweise aus der Gruppe von LED, Halogenlampe, Xenonbrenner, Glühlampe, Laser usw. gewählt sein. Der Laser kann als Zielbeleuchtung eingesetzt werden. Die dafür notwendige Energieversorgung sowie die entsprechenden Betätigungsmittel dafür können wiederum an der Gehäuseerweiterung 36 angeordnet bzw. im Aufnahmeraum 59 angeordnet sein.

Weiters ist in der Fig. 3 noch vereinfacht dargestellt, dass an der Gehäuseerweiterung 36 auch noch zumindest ein Anzeigelement 65 angeordnet sein kann. Dieses Anzeigelement 65 steht mit entsprechenden Mess- bzw. Ermittlungsgeräten in Leitungsverbindung und dient zur Darstellung von einzelnen Werten aus der Gruppe von Positionskoordinaten, Temperatur, Beleuchtungsstärke, Luftdruck, Feuchtigkeit, Seehöhe, Kompassanzeige sowie dem Ladezustand. Mit der Anzeige des Ladezustandes kann beispielsweise die noch zu Verfügung stehende elektrische Energie der Energiespeichervorrichtung, wie einer Batterie oder eines Akkus, optisch dargestellt werden. Das Anzeigeelement 65 kann als eigenes Bauteil an der Außenseite der Gehäuseerweiterung 36 angeordnet sein und/oder als eigene Bilddarstellung zur Ein- bzw. Überblendung in den optischen Strahlengang dienen. Gleichfalls wäre es aber auch noch möglich, das fernoptische Gerät in Kombination mit einem Neigungsmesser auszustatten und so mit dem zuvor beschriebenen Entfernungsmesser auf Laserbasis sowie dem Kompass für einfache Vermessungstätigkeiten heranziehen zu können. Mit entsprechenden Berechnungsmethoden können dann die Horizontal- und/oder Vertikaldistanzen berechnet werden.

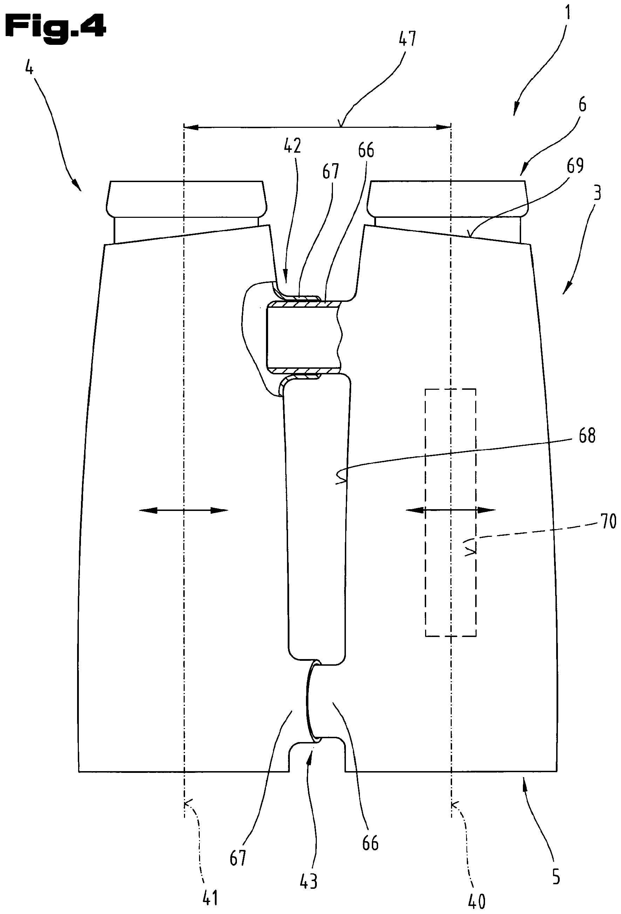

In der Fig. 4 ist das fernoptische Gerät, insbesondere das Beobachtungsgerät 1 in Draufsicht in der Gebrauchslage gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Die Fig. 4 zeigt ein Beobachtungsgerät 1 mit einer alternativen Ausführungsform der Augenweiteneinstellung der beiden Beobachtungsteile 3, 4. Dazu ist zwischen den Beobachtungsteilen 3, 4 zumindest eine teleskopartig ausgebildete Verbindung vorgesehen, die eine lineare Verschiebung der Beobachtungsteile 3, 4 zueinander in einer zu den Längserstreckungen der beiden Beobachtungsteile 3, 4 senkrechten Richtung ermöglicht.

Das oder die Verbindungselemente 42, 43 sind hier im Gegensatz zu der zuvor beschriebenen Ausführungsform als Schwenkverbindung nun aus in senkrechter Richtung bezüglich der Längsachse 40, 41 des Beobachtungsteils 3, 4 teleskopierbaren Brückenteilen 66, 67 ausgebildet. Damit kann der zuvor beschriebene Abstand 47 zwischen den Längsachsen 40, 41, insbesondere im Bereich der Okularseite 6, wiederum auf unterschiedliche Augenabstände des Benutzers eingestellt werden.

Sind in Längserstreckung des fernoptischen Geräts, insbesondere dessen Beobachtungsteilen 3, 4, zwischen der Okularseite 6 und der Objektivseite 5 zumindest zwei voneinander distanzierte Verbindungselemente 42, 43 vorgesehen, so umgrenzen die Verbindungselemente 42, 43 zwischen sich im Zusammenwirken mit den beiden Beobachtungsteilen 3, 4 an den einander zugewendeten Seiten einen dazwischen ausgebildeten Freiraum 68. Der Freiraum 68 kann als Durchgriff zwischen den Beobachtungsteilen 3, 4 für die Handhabung des fernoptischen Geräts dienen und bietet große Vorteile, da so jeder der beiden Beobachtungsteile 3, 4 wahlweise einfach umgriffen und damit sicher gehalten werden kann. Diese Ausbildung ist auch vereinfacht in der Fig. 1 gezeigt.

Weiters ist noch im Bereich der Okularseite 6 dargestellt, dass das Beobachtungsteil 3, 4, insbesondere dessen Gehäuseteil 38, 39, eine Freistellung 69 aufweist, welche ausgehend von einander zugewendeten Seiten der Beobachtungsteile 3, 4 bzw. deren Gehäuseteile 38, 39 hin auf die vom Verbindungselement 42 bzw. 43 abgewendete Richtung sowie abfallend in Richtung auf die Objektivseite 5 ausgerichtet ist. Dies bedeutet, dass die Gehäuseteile 38, 39 bei der zuvor beschriebenen Gebrauchslage an deren okularseitigen Ende 52 abfallend von der dem Verbindungselement 42 zugewendeten Seite nach außen abfallend ausgerichtet ist.

Bei der zuvor beschriebenen Ausbildungen des fernoptischen Geräts kann es sich als vorteilhaft erweisen, wenn das Beobachtungsteil 3 und/oder 4 zumindest bereichsweise eine hier nicht näher dargestellte Heizeinrichtung an dessen Außenseite bzw. aber auch im Bereich des Gehäuseteils 38 bzw. 39 aufweist. Die entsprechende Energieversorgung kann dabei durch den zuvor beschriebenen und in der Gehäuseerweiterung 36 aufgenommenen Energiespeicher realisiert werden. Zusätzliche wäre es aber auch noch möglich, dem fernoptischen Gerät insbesondere einem der Beobachtungsteile 3 und/oder 4 zur Erzeugung von elektrischer Energie einen Bewegungsdynamo und/oder einen mit der Hand betätigbaren Handdynamo zuzuordnen, um so dem Energiespeicher während der Benutzung und der damit verbunden Bewegung entsprechende Energie zuzuführen und damit wiederum aufzuladen.

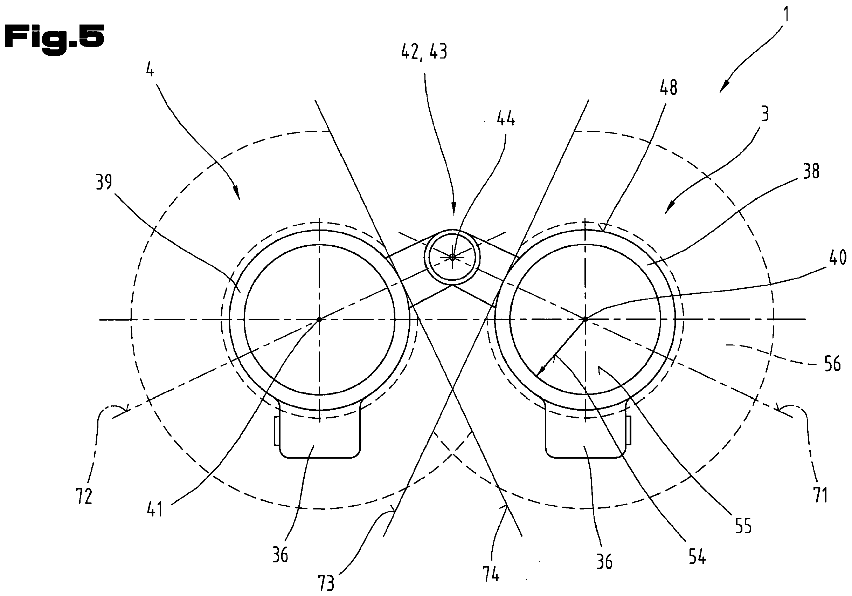

In der Fig. 5 ist das fernoptische Gerät, insbesondere das Beobachtungsgerät 1 in einer Ansicht auf das Objektiv 5 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 3 hingewiesen bzw. Bezug genommen.

Das hier gezeigte fernoptische Gerät umfasst wiederum die beiden Beobachtungsteile 3, 4 mit ihren Gehäuseteilen 38, 39 und die durch diese definierten Längsachsen 40, 41. Die beiden Gehäuseteile 38, 39 sind wiederum über Verbindungselemente 42, 43 miteinander schwenkbar im Bereich der Schwenkachse 44 gekuppelt bzw. verbunden.

Im Gegensatz zu der Darstellung in der Fig. 3 wird hier zur Definition bzw. der Festlegung des Anordnungsbereichs der Gehäuseerweiterung 36 am Gehäuseteil 38 bzw. 39 nicht die zuvor beschriebene Bezugsebene 49 verwendet, welche durch die beiden Längsachsen 40, 41 aufgespannt wurde, sondern weitere dazu unterschiedlich ausgerichtete Ebenen 71, 72 festgelegt. So wird die erste Ebene 71 durch die Längsachse 40 des ersten Beobachtungsteils 3 und der gemeinsamen Schwenkachse 44 aufgespannt. Die weitere bzw. zweite Ebene 72 hingegen durch die Längsachse 41 des zweiten Beobachtungsteils 4 und wiederum durch die gemeinsame Schwenkachse 44 aufgespannt. Damit wird für die Festlegung des Anordnungsbereichs der Gehäuseerweiterung 36 der zuvor benötigte Abstand 47 zwischen den beiden Okularen 6 nicht mehr benötigt.

Die Anordnung der Gehäuseerweiterung 36 an den Beobachtungsteilen 3, 4 kann analog dazu erfolgen, wie dies bereits zuvor detailliert in den Fig. 1 bis 3 beschrieben worden ist. Die umfängliche Anordnung im Querschnitt bezüglich der Längsachse 40, 41 des Beobachtungsteils 3, 4 erfolgt derart, dass Oberflächenpunkte des von der optischen Achse des Objektivs 5 am weitesten entfernten Bereichs der Gehäuseerweiterung 36 einen Normalabstand auf die optische Achse aufweisen, wobei der Wert des Normalabstandes bezogen auf den Radius 54 der Linse 55 des Objektivs 5 zwischen einer unteren Grenze von 130 % und einer oberen Grenze von 250 % liegt. Es können auch wiederum die zuvor beschriebenen Abweichungen der Grenzen auftreten, falls dies als notwendig erscheint. Durch diese beiden Grenzwerte wird wiederum der zuvor beschriebene Kreisringabschnitt 56 definiert. Anliegend an der Außenseite 48 des Gehäuseteils 38,39 wird jedem der beiden Gehäuseteile 38, 39 bzw. beider Beobachtungsteile 3, 4 eine Tangente 73, 74 zugeordnet. Dabei ist die Tangente 73 dem ersten Beobachtungsteil 3 und die weitere Tangente 74 dem weiteren bzw. zweiten Beobachtungsteil 4 zugeordnet. So ist die erste Tangente 73 im Querschnitt gesehen zwischen der Längsachse 40 und der gemeinsamen Schwenkachse 44 anliegend an der Außenseite 48 angeordnet. Die weitere Tangente 74 ist analog zwischen der weiteren Längsachse 41 und der gemeinsamen Schwenkachse 44 anliegend am zweiten Beobachtungsteil 4 verlaufend ausgerichtet. Dabei befindet sich die Gehäuseerweiterung 36 in einem von der Schwenkachse 44 abgewendeten Bereich der an die Außenseite 48 des Beobachtungsteils 3, 4 anliegenden Tangente 73, 74.
Die Tangente 73 bzw. 74 ist nicht nur anliegend an der Außenseite 48 angeordnet, sondern verläuft auch im Querschnitt senkrecht zu der dieser zugeordneten Ebene 71 bzw. 72 sowie an der der Schwenkachse 44 zugewendeten Außenseite 48 des Beobachtungsteils 3, 4.
Damit ist die Anordnung der Gehäuseerweiterung 36 im Querschnitt bezüglich der Längsachse 40, 41 am Gehäuseteil 38, 39 unabhängig von der relativen Stellung der beiden Beobachtungsteile 3, 4 zueinander festgelegt.
Dabei kann nicht nur eine Gehäuseerweiterung 36 am Beobachtungsteil 3, 4 angeordnet sein, sondern es können umfänglich gesehen auch mehrere derartige Gehäuseerweiterungen 36 am jeweiligen Beobachtungsteil 3 und/oder 4 vorgesehen sein. Gleichfalls wäre es aber auch möglich, die Gehäuseerweiterung 36 durchgehend auf der von der Tangente 73,74 abgewendeten Seite der Schwenkachse 44 auszubilden.
Unabhängig davon wäre es aber auch noch möglich, allen zuvor beschriebenen Ausführungsformen im Bereich der die Beobachtungsteile 3, 4 kuppelnden Verbindungselemente 42 und/oder 43 eine bedarfsweise lösbare Kupplungsvorrichtung zuzuordnen bzw. dort auszubilden, um die beiden Beobachtungsteile 3, 4 voneinander trennen und bei Bedarf wiederum zu einem binokularen Beobachtungsgerät bzw. fernoptischen Gerät zusammensetzen zu können. Damit wird die Möglichkeit geschaffen, jedes der beiden Beobachtungsteile 3 und/oder 4 als eine für sich eigenständig verwendbare Baueinheit auszubilden. Wird beispielsweise das erste Beobachtungsteil 3 mit einem Optiksystem, das den visuellen Strahlengang 11 ausbildet, ausgestattet, kann das erste Beobachtungsteil 3 alleinig für sich beispielsweise als Zielfernrohr für eine Schusswaffe dienen und damit verbunden werden. Dafür ist es vorteilhaft, wenn das Beobachtungsteil 3, 4 eine Schnittstelle 70 zur Kupplung mit einer Schusswaffe umfasst, welche in der Fig. 4 beim ersten Beobachtungsteil 3 vereinfacht in strichlierten Linien angedeutet ist.
Bei all den zuvor beschriebenen Ausführungen ist es aber auch noch möglich, mehrere derartiger Gehäuseerweiterungen 36 über den Umfang verteilt innerhalb des zuvor definierten Kreisringabschnittes anzuordnen, um so die Möglichkeit zu schaffen, mehrere voneinander unabhängige Funktionskomponenten am Beobachtungsteil 3, 4 anzuordnen und falls diese kuppelbar ausgeführt sind, gegebenenfalls durch derzeit nicht verwendete Funktionskomponenten austauschen zu können. Damit wird ein hoher Flexibilitätsgrad erreicht und für die entsprechenden Benutzer die Möglichkeit geschaffen, das fernoptische Gerät, insbesondere die einzelnen Beobachtungsteile 3, 4 jeweils individuell auf die persönlichen Bedürfnisse abstimmen und ausbilden zu können.
Die Anordnung und Ausbildung der Gehäuseerweiterung 36 kann beispielsweise nur an einem der Beobachtungsteile 3, 4 oder aber auch an beiden Beobachtungsteilen 3, 4 erfolgen. Auch können die Anordnungsmöglichkeiten der Gehäuseerweiterung 36 an den beiden Beobachtungsteileri 3, 4 zueinander unterschiedlich aber auch von der Lage bezüglich der Schwenkachse 44 spiegelbildlich zueinander angeordnet sein.
Besonders vorteilhaft kann es auch noch sein, wenn zumindest einzelne Bauteile bzw. daraus gebildete Baugruppen der beiden Beobachtungsteile 3, 4 zueinander gleichartig ausgebildet sowie bevorzugt auch noch symmetrisch bezüglich der Schwenkachse 44 angeordnet sind.
Die beiden Gehäuseteile 38, 39 sind bevorzugt bezüglich der gemeinsamen Schwenkachse 44 symmetrisch bzw. spiegelbildlich ausgebildet, wobei sich lediglich Unterschiede bei der Ausbildung und Anordnung der Verbindungselemente 42, 43 bzw. der Gelenkbrückenteile 45, 46 ergeben können.
Die Ausführungsbeispiele zeigen mögliche Ausführungsvarianten des binokularen Beobachtungsgeräts 1 bzw. der fernoptischen Einrichtung, wobei an dieser Stelle bemerkt sei, dass die Erfindung nicht auf die speziell dargestellten Ausführungsvarianten derselben eingeschränkt ist, sondern vielmehr im Rahmen der nachfolgenden Ansprüche auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

**Bezugszeichenaufstellung**

| | | | |
|---|---|---|---|
| 1 | Beobachtungsgerät | 41 | Längsachse |
| 2 | Laser-Entfernungsmesser | 42 | Verbindungselement |
| 3 | Erster Beobachtungsteil | 43 | Verbindungselement |
| 4 | Zweiter Beobachtungsteil | 44 | Schwenkachse |
| 5 | Objektiv | 45 | Gelenkbrückenteil |
| | | | |
| 6 | Okular | 46 | Gelenkbrückenteil |
| 7 | Fokussiereinrichtung | 47 | Abstand |
| 8 | Umkehrsystem | 48 | Außenseite |
| 9 | Dachkantprisma | 49 | Bezugsebene |
| 10 | Umlenkprisma | 50 | Tangentialebene |
| | | | |
| 11 | Erster visueller Strahlengang | 51 | Gesamtlänge |
| 12 | Zweiter visueller Strahlengang | 52 | Okularseitiges Ende |
| 13 | Sendeoptiksystem | 53 | Objektivseitiges Ende |
| 14 | Lasersender | 54 | Radius |
| 15 | Senderoptik | 55 | Linse |
| | | | |
| 16 | Strahlengang | 56 | Kreisringabschnitt |
| 17 | Umlenkprisma | 57 | Wandstärke |
| 18 | Teilerprisma | 58 | Wandstärke |
| 19 | Fläche | 59 | Aufnahmeraum |
| 20 | Strahlengang | 60 | Gehäusebauteil |
| | | | |
| 21 | Empfänger | 61 | Dichtelement |
| 22 | Empfangsoptiksystem | 62 | Steckverbindung |
| 23 | Empfängerprisma | 63 | Sende- und/oder Empfangseinrichtung |
| 24 | Steuer- und Auswerteeinheit | | |
| 25 | Anzeigeelement | 64 | Leuchtmittel |
| | | 65 | Anzeigeelement |
| 26 | Anzeigeoptik | | |
| 27 | Strahlengang | 66 | Brückenteil |
| 28 | Zielmarke | 67 | Brückenteil |
| 29 | Strahlengang | 68 | Freiraum |
| 30 | Zielmarkenoptik | 69 | Freistellung |
| | | 70 | Schnittstelle |
| 36 | Gehäuseerweiterung | | |
| 37 | Daumenvertiefung | 71 | Ebene |
| 38 | Gehäuseteil | 72 | Ebene |
| 39 | Gehäuseteil | 73 | Tangente |
| 40 | Längsachse | 74 | Tangente |
| | | 75 | Längserstreckung |
| | | | |
| | | 76 | Längsabschnitt |

## Patentansprüche

1. Fernoptisches Gerät, insbesondere Beobachtungsgerät (1), mit zumindest zwei Beobachtungsteilen (3, 4), die jeweils Gehäuseteile (38, 39) mit einer Okularseite (6) und einer Objektivseite (5) umfassen, wobei sich zwischen der Okularseite (6) und der Objektivseite (5) eine Längsachse (40, 41) des Beobachtungsteils (3, 4) erstreckt, und zumindest einem Beobachtungsstrahlengang mit einer optischen Achse, bei dem die Beobachtungsteile (3, 4) eine rohr- bzw. tubusartige Grundform aufweisen und jeweils zumindest ein Verbindungselement (42, 43) umfassen, wobei die Beobachtungsteile (3, 4) durch das zumindest eine Verbindungselement (42, 43) miteinander verbunden und nebeneinander in im Wesentlichen paralleler Lage und in einer verstellbaren Distanz zueinander angeordnet sind, wobei in einer Gebrauchslage die Längsachsen (40, 41) der Beobachtungsteile (3, 4) im Bereich der Okularseiten (6) in einem Abstand (47) von zumindest 54 mm voneinander distanziert angeordnet sind und dabei die beiden Längsachsen (40, 41) eine Bezugsebene (49) aufspannen und wobei zumindest einer der beiden voneinander distanzierten Beobachtungsteile (3, 4) an einer Außenseite (48) zusätzlich zu dem zumindest einen Verbindungselement (42, 43) und von dem Verbindungselement (42, 43) distanziert zumindest eine Gehäuseerweiterung (36) aufweist, wobei die Gehäuseerweiterung (36) die rohr- bzw. tubusartige Grundform des Beobachtungsteils (3, 4) radial überragt und an einer der Längsachse (40, 41) zugewendeten Innenseite einen Aufnahmeraum (59) für ein strahlablenkendes System, das ein Prisma umfasst, ausbildet und das Prisma in dem Aufnahmeraum (59) angeordnet ist, und wobei die Gehäuseerweiterung (36) sich innerhalb eines Teilabschnittes mit einer Längserstreckung (75) in einer unteren Grenze von 20 % und einer oberen Grenze von 80 % einer Gesamtlänge (51) des Beobachtungsteils (3, 4) oder des fernoptischen Geräts zwischen einem okularseitigen Ende (52) und einem objektivseitigen Ende (53) erstreckt, so dass für einen jeden innerhalb des Teilabschnittes (75) gewählten Querschnitt bezüglich der Längsachse (40, 41) des Beobachtungsteils (3, 4) ein von der optischen Achse des Objektivs (5) maximal beabstandeter Oberflächenpunkt der Gehäuseerweiterung (36) einen Normalabstand auf die optische Achse des Objektivs (5) hat, der zwischen einer unteren Grenze von 130 % und einer oberen Grenze von 250 % eines Radius (54) einer Linse (55) des Objektivs (5) liegt, wobei die Gehäuseerweiterung (36) sich auf einer vom weiteren Beobachtungsteil (4) abgewendeten Seite einer bei einem Abstand (47) der Längsachsen (40, 41) der Beobachtungsteile (3, 4) im Bereich der Okularseiten (6) von 62 mm an der Außenseite (48) des Beobachtungsteils (3, 4) anliegenden Tangente (50) befindet, welche an der dem weiteren Beobachtungsteil (4, 3) zugewendeten Seite des Beobachtungsteils (3, 4) angeordnet ist und senkrecht zur Bezugsebene (49) ausgerichtet ist.

2. Fernoptisches Gerät, insbesondere Beobachtungsgerät (1), mit zumindest zwei Beobachtungsteilen (3, 4), die jeweils Gehäuseteile (38, 39) mit einer Okularseite (6) und einer Objektivseite (5) umfassen, wobei sich zwischen der Okularseite (6) und der Objektivseite (5) eine Längsachse (40, 41) des Beobachtungsteils (3, 4) erstreckt, und zumindest einem Beobachtungsstrahlengang mit einer optischen Achse, bei dem die Beobachtungsteile (3, 4) eine rohr- bzw. tubusartige Grundform aufweisen und jeweils zumindest ein Verbindungselement (42, 43) umfassen, wobei die Beobachtungsteile (3, 4) durch das zumindest eine Verbindungselement (42, 43) miteinander verbunden und nebeneinander in im Wesentlichen paralleler Lage und in einer zueinander verstellbaren Distanz um eine Schwenkachse (44) zueinander winkelig verschwenkbar angeordnet sind und deren Lage relativ zueinander bzw. auch bezüglich der Schwenkachse (44) veränderbar ist, wobei zumindest einer der beiden voneinander distanzierten Beobachtungsteile (3, 4) an einer Außenseite (48) zusätzlich zu dem zumindest einen Verbindungselement (42, 43) und von dem Verbindungselement (42, 43) distanziert zumindest eine Gehäuseerweiterung (36) aufweist, wobei die Gehäuseerweiterung (36) die rohr- bzw. tubusartige Grundform des Beobachtungsteils (3, 4) radial überragt und an einer der Längsachse (40, 41) zugewendeten Innenseite einen Aufnahmeraum (59) für ein strahlablenkendes System, das ein Prisma umfasst, ausbildet und das Prisma in dem Aufnahmeraum (59) angeordnet ist, und wobei die Gehäuseerweiterung (36) sich innerhalb eines Teilabschnittes mit einer Längserstreckung in einer unteren Grenze von 20 % und einer oberen Grenze von 80 % einer Gesamtlänge (51) des Beobachtungsteiles (3, 4) oder des fernoptischen Gerätes zwischen einem okularseitigen Ende (52) und einem objektivseitigen Ende (53) erstreckt, so dass für einen jeden innerhalb des Teilabschnittes (75) gewählten Querschnitt bezüglich der Längsachse (40, 41) des Beobachtungsteils (3, 4) ein von der optischen Achse des Objektivs (5) maximal beanstandeter Oberflächenpunkt der Gehäuseerweiterung (36) einen Normalabstand auf die optische Achse aufweist, dessen Wert bezogen auf einen Radius (54) einer Linse (55) des Objektives (5) zwischen einer unteren Grenze von 130 % und einer oberen Grenze von 250 % liegt, und dass die Gehäuseerweiterung (36) in einem von der Schwenkachse (44) abgewendeten Bereich einer an der Außenseite (48) des Beobachtungsteils (3, 4) anliegenden Tangente (73, 74) liegt, wobei die Tangente (73, 74) senkrecht zu einer durch die Längsachse (40, 41) und die Schwenkachse (44) aufgespannten Ebene (71, 72) ausgerichtet ist sowie an der der Schwenkachse (44) zugewendeten Außenseite (48) des Beobachtungsteils (3, 4) anliegend verläuft.

3. Fernoptisches Gerät nach Anspruch 1 oder 2, **dadurch gekennzeichnet, dass** sich die Gehäuseerweiterung (36) im Querschnitt bezüglich der Längsachse (40, 41) des Beobachtungsteils (3, 4) umfänglich am Beobachtungsteil (3, 4) in einer unteren Grenze von 5° und einer oberen Grenze von 270° erstreckt.

4. Fernoptisches Gerät nach einem der vorhergehenden Ansprüche, **dadurch gekennzeichnet, dass** die Gehäuseerweiterung (36) eine Wandstärke (57) aufweist, welch in etwa einer Wandstärke (58) des Gehäuseteils (38, 39) entspricht.

5. Fernoptisches Gerät nach einem der vorhergehenden Ansprüche, **dadurch gekennzeichnet, dass** die Gehäuseerweiterung (36) integraler Bestandteil des Gehäuseteils (38, 39) ist.

6. Fernoptisches Gerät nach einem der Ansprüche 1 bis 4, **dadurch gekennzeichnet, dass** die Gehäuseerweiterung (36) durch ein separates und mit dem Gehäuseteil (38, 39) kuppelbares Gehäusebauteil (60) gebildet ist.

7. Fernoptisches Gerät nach Anspruch 6, **dadurch gekennzeichnet, dass** zwischen dem kuppelbaren Gehäusebauteil (60) der Gehäuseerweiterung (36) und dem Gehäuseteil (38, 39) eine koppelbare Steckverbindung (62) angeordnet ist.

8. Fernoptisches Gerät nach einem der vorhergehenden Ansprüche, **dadurch gekennzeichnet, dass** die Gehäuseerweiterung (36) im Längsschnitt bezüglich der Längsachse (40, 41) des Beobachtungsteils (3, 4) einen kielartig ausgebildeten Querschnitt aufweist.

9. Fernoptisches Gerät nach einem der vorhergehenden Ansprüche, **dadurch gekennzeichnet, dass** in den Aufnahmeraum (59) zumindest einzelne der Bauteile aus der Gruppe von Entfernungsmesseinrichtung, Navigationssystem wie GPS (Global Positioning System), Femübertragungsmittel wie W-LAN, Bluetooth, Infrarot, Laser und Funk, Energieerzeugungsvorrichtung, Energiespeichervorrichtung, Energiespeicher, Wärmebildgeräte und mobile Kommunikationseinrichtungen eingesetzt sind.

10. Fernoptisches Gerät nach einem der vorhergehenden Ansprüche, **dadurch gekennzeichnet, dass** an der Gehäuseerweiterung (36) eine Kommunikationsschnittstelle und/oder ein Anschluss für eine Energieversorgungseinrichtung angeordnet ist.

11. Fernoptisches Gerät nach einem der vorhergehenden Ansprüche, **dadurch gekennzeichnet, dass** an der Gehäuseerweiterung (36) zumindest ein Leuchtmittel (64) angeordnet ist.

12. Fernoptisches Gerät nach einem der vorhergehenden Ansprüche, **dadurch gekennzeichnet, dass** an der Gehäuseerweiterung (36) ein Anzeigeelement (65) zur Darstellung zumindest eines Wertes aus der Gruppe von Positionskoordinaten, Temperatur, Beleuchtungsstärke, Luftdruck, Feuchtigkeit, Seehöhe, Kompassanzeige, Ladezustandsanzeige ausgebildet ist.

13. Fernoptisches Gerät nach einem der vorhergehenden Ansprüche, **dadurch gekennzeichnet, dass** zwischen der Gehäuseerweiterung (36) und der Okularseite (6) am Beobachtungsteil (3, 4) eine Daumenvertiefung (37) ausgebildet ist.

14. Fernoptisches Gerät nach Anspruch 13, **dadurch gekennzeichnet, dass** sich die Daumenvertiefung (37) im Längsschnitt bezüglich der Längsachse (40, 41) des Beobachtungsteils (3, 4) innerhalb des Querschnitts des rohrförmig ausgebildeten Gehäuseteils (38, 39) hinein erstreckt.

15. Fernoptisches Gerät nach einem der vorhergehenden Ansprüche, **dadurch gekennzeichnet, dass** das Beobachtungsteil (3, 4), insbesondere dessen Gehäuseteil (38, 39), durchgängig nahezu eine einheitliche Wandstärke (58) in einer unteren Grenze von 0,5 mm und einer oberen Grenze von 1,5 mm aufweist.

16. Fernoptisches Gerät nach einem der vorhergehenden Ansprüche, **dadurch gekennzeichnet, dass** das Verbindungselement (42, 43) durch Gelenkbrückenteile (45, 46) gebildet ist und die Gelenkbrückenteile (45, 46) jeweils integraler Bestandteil des Beobachtungsteils (3, 4) sind.

17. Fernoptisches Gerät nach einem der vorhergehenden Ansprüche 1 bis 15, **dadurch gekennzeichnet, dass** das Verbindungselement (42, 43) aus in senkrechter Richtung bezüglich der Längsachse (40, 41) des Beobachtungsteils (3, 4) teleskopierbaren Brückenteilen (66, 67) ausgebildet ist.

18. Fernoptisches Gerät nach einem der vorhergehenden Ansprüche, **dadurch gekennzeichnet, dass** das Beobachtungsteil (3, 4) aus einem Leichtmetallwerkstoff wie Magnesium oder einer Magnesium enthaltenden Legierung gebildet ist.

19. Fernoptisches Gerät nach einem der Ansprüche 1 bis 17, **dadurch gekennzeichnet, dass** das Beobachtungsteil (3, 4) aus einem faserverstärkten Kunststoff gebildet ist, wobei einzelne der Fasern aus der Gruppe von Glasfasern, Aramidfasern, Kohlenstofffasern, Metallfasern, Keramikfasern, Polyimidfasern gewählt sind.

20. Fernoptisches Gerät nach einem der vorhergehenden Ansprüche, **dadurch gekennzeichnet, dass** das Beobachtungsteil (3, 4), insbesondere dessen Gehäuseteil (38, 39), an dessen Okularseite (6) eine Freistellung (69) aufweist, welche ausgehend von einander zugewendeten Seiten der Beobachtungsteile (3, 4) hin auf die vom Verbindungselement (42, 43) abgewendete Richtung sowie abfallend in Richtung auf die Objektivseite (5) ausgerichtet ist.

21. Fernoptisches Gerät nach Anspruch 13, **dadurch gekennzeichnet, dass** der Schwerpunkt des Beobachtungsgeräts (1) im Längsschnitt bezüglich der Längsachse (40, 41) gesehen, in einem Längsabschnitt (76) angeordnet ist, welcher dem Abschnitt der Daumenvertiefung (37) in der gleichen Richtung entspricht.

22. Fernoptisches Gerät nach einem der vorhergehenden Ansprüche, **dadurch gekennzeichnet, dass** das Beobachtungsteil (3, 4) eine Schnittstelle (70) zur Kupplung mit einer Schusswaffe umfasst.

## Claims

1. A long-range optical device, in particular an observation device (1), having at least two observation parts (3, 4), each comprising housing parts (38, 39) with an ocular side (6) and an objective side (5), a longitudinal axis (40, 41) of the observation part (3, 4) extending between the ocular side (6) and the objective side (5), and having at least one observation beam path with an optical axis, in which the observation parts (3, 4) have a pipe-shaped or tubular basic shape and each comprise at least one connection element (42, 43), the observation parts (3, 4) being connected to each other via the at least one connection element (42, 43) and arranged essentially parallel next to each other and spaced an adjustable distance apart from each other, wherein, in a usage position, the longitudinal axes (40, 41) of the observation parts (3, 4) in the region of the ocular sides (6) have a spacing (47) of at least 54 mm and the two longitudinal axes (40, 41) define a plane of reference (49), and wherein at least one of the two spaced apart observation parts (3, 4) has, in addition to the at least one connection element (42, 43) and spaced from the connection element (42, 43), at least one flared portion (36) on an external side (48), wherein the flared portion (36) projects radially beyond the pipe-shaped or tubular basic shape of the observation part (3, 4) and forms an accommodation space (59) on an inner side facing the longitudinal axis (40, 41) for a beam-deflecting system comprising a prism, and the prism is arranged in the accommodation space (59), and wherein the flared portion (36) extends inside a sub-section having a longitudinal extension (75) at a lower limit of 20% and an upper limit of 80% of an overall length (51) of the observation part (3, 4) or of the long-range optical device between an ocular-side end (52) and an objective-side end (53), so that, for each cross-section selected within the sub-section (75), relative to the longitudinal axis (40, 41) of the observation part (3, 4), a surface point of the flared portion (36) furthest away from the optical axis of the objective (5) has a normal distance to the optical axis of the objective (5) which lies between a lower limit of 130% and an upper limit of 250% of a radius (54) of a lens (55) of the objective (5), wherein the flared portion (36) is on a side, facing away from the other observation part (4), of a tangent (50) which, when the longitudinal axes (40, 41) of the observation parts (3, 4) in the region of the ocular sides (6) have a spacing (47) of 62 mm, touches the external side (48) of the observation part (3, 4), is arranged on the side of the observation part (3, 4) facing the other observation part (4, 3) and is oriented perpendicular to the plane of reference (49).

2. A long-range optical device, in particular an observation device (1), having at least two observation parts (3, 4), each comprising housing parts (38, 39) with an ocular side (6) and an objective side (5), a longitudinal axis (40, 41) of the observation part (3, 4) extending between the ocular side (6) and the objective side (5), and having at least one observation beam path with an optical axis, in which the observation parts (3, 4) have a pipe-shaped or tubular basic shape and each comprise at least one connection element (42, 43), the observation parts (3, 4) being connected to each other via the at least one connection element (42, 43) and arranged essentially parallel next to each other and pivotable at an angle at an adjustable distance apart from each other about a pivot axis (44) and the position of which relative to each other or also with respect to the pivot axis (44) is variable, wherein at least one of the two spaced apart observation parts (3, 4) has, in addition to the at least one connection element (42, 43) and spaced from the connection element (42, 43), at least one flared portion (36) on an external side (48), wherein the flared portion (36) projects radially beyond the pipeshaped or tubular basic shape of the observation part (3, 4) and forms an accommodation space (59) on an inner side facing the longitudinal axis (40, 41) for a beam-deflecting system comprising a prism, and the prism is arranged in the accommodation space (59), and wherein the flared portion (36) extends inside a sub-section having a longitudinal extension at a lower limit of 20% and an upper limit of 80% of an overall length (51) of the observation part (3, 4) or of the long-range optical device between an ocular-side end (52) and an objective-side end (53), so that, for each cross-section selected within the sub-section (75), relative to the longitudinal axis (40, 41) of the observation part (3, 4), a surface point of the flared portion (36) furthest away from the optical axis of the objective (5) has a normal distance to the optical axis, the value of this normal distance in relation to the radius (54) of a lens (55) of the objective (5) lying between a lower limit of 130% and an upper limit of 250%, and that the flared portion (36) lies in a region, facing away from the pivot axis (44), of a tangent (73, 74) which touches the external side (48) of the observation part (3, 4), wherein the tangent (73, 74) is oriented perpendicular to a plane (71, 72) defined by the longitudinal axis (40, 41) and the pivot axis (44) and touches the external side (48) of the observation part (3, 4) facing the pivot axis (44).

3. The long-range optical device according to claim 1 or 2, **characterized in that** the flared portion (36) extends along the circumference of the observation part (3, 4) in cross-section relative to the longitudinal axis (40, 41) of the observation part (3, 4) by between a lower limit of 5° and an upper limit of 270°.

4. The long-range optical device according to any one of the preceding claims, **characterized in that** the flared portion (36) has a wall thickness (57), which approximately corresponds to a wall thickness (58) of the housing part (38, 39).

5. The long-range optical device according to any one of the preceding claims, **characterized in that** the flared portion (36) is an integral component of the housing part (38, 39).

6. The long-range optical device according to any one of claims 1 to 4, **characterized in that** the flared portion (36) is formed by a separate housing component (60) that can be coupled to the housing part (38, 39).

7. The long-range optical device according to claim 6, **characterized in that** a coupleable plug connection (62) is arranged between the coupleable housing component (60) of the flared portion (36) and the housing part (38, 39).

8. The long-range optical device according to any one of the preceding claims, **characterized in that** the flared portion (36) has a keel-shaped cross-section in a longitudinal section relative to the longitudinal axis (40, 41) of the observation part (3, 4).

9. The long-range optical device according to any one of the preceding claims, **characterized in that** in the accommodation space (59), at least some of the components from the group of beam-forming systems, beam-deflecting systems and range finding devices, navigation systems such as GPS (Global Positioning System), remote communication systems such as W-LAN, Bluetooth, infrared, lasers and radio, energy generating devices, energy accumulators or energy storage devices, thermal imaging devices and mobile communications devices are used.

10. The long-range optical device according to any one of the preceding claims, **characterized in that** a communications interface and/or a connection for a power supply device is arranged on the flared portion (36).

11. The long-range optical device according to any one of the preceding claims, **characterized in that** at least one lighting means (64) is arranged on the flared portion (36).

12. The long-range optical device according to any one of the preceding claims, **characterized in that** a display element (65) is formed on the flared portion (36) to display at least one value from the group of position coordinates, temperature, illumination strength, air pressure, humidity, sea level, compass points and the charging state.

13. The long-range optical device according to any one of the preceding claims, **characterized in that** a thumb recess (37) is constructed on the observation part (3, 4) between the flared portion (36) and the ocular side (6).

14. The long-range optical device according to claim 13, **characterized in that** the thumb recess (37) in longitudinal section relative to the longitudinal axis (40, 41) of the observation part (3, 4) extends inside the cross-section of the pipe-shaped housing part (38, 39).

15. The long-range optical device according to any one of the preceding claims, **characterized in that** the observation part (3, 4), in particular the housing part (38, 39) thereof, has almost a uniform wall thickness (58) of between a lower limit of 0.5 mm and an upper limit of 1.5 mm over its whole length.

16. The long-range optical device according to any one of the preceding claims, **characterized in that** the connection element (42, 43) is formed by hinged bridge parts (45, 46), and the hinged bridge parts (45, 46) are each an integral component of the observation part (3, 4).

17. The long-range optical device according to any one of claims 1 to 15, **characterized in that** the connection element (42, 43) is made of bridge parts (66, 67) which are telescopic in a direction perpendicular to the longitudinal axis (40, 41) of the observation part (3, 4).

18. The long-range optical device according to any one of the preceding claims, **characterized in that** the observation part (3, 4) is formed from a light metallic material such as magnesium or a magnesium-containing alloy.

19. The long-range optical device according to any one of claims 1 to 17, **characterized in that** the observation part (3, 4) is formed from a fibre-reinforced plastic, wherein some of the fibres are selected from the group of glass fibres, aramide fibres, carbon fibres, metallic fibres, ceramic fibres or polyimide fibres.

20. The long-range optical device according to any one of the preceding claims, **characterized in that** the observation part (3, 4), in particular the housing part (38, 39) thereof, has a release (69) on its ocular side (6), which is aligned starting from mutually facing sides of the observation parts (3, 4) in the direction facing away from the connection element (42, 43) and tapering in the direction of the objective side (5).

21. The long-range optical device according to claim 13, **characterized in that** the centre of gravity of the observation device (1), viewed in longitudinal section with respect to the longitudinal axis (40, 41), is arranged in a longitudinal section (76) which corresponds to the section of the thumb recess (37) in the same direction.

22. The long-range optical device according to any one of the preceding claims, **characterized in that** the observation part (3, 4) comprises an interface (70) for coupling to a firearm.

## Revendications

1. Appareil de téléoptique, en particulier appareil d'observation (1), avec au moins deux parties d'observation (3, 4) qui comprennent respectivement des parties de boîtier (38, 39) avec un côté oculaire (6) et un côté objectif (5), un axe longitudinal (40, 41) de la partie d'observation (3, 4) s'étendant entre le côté oculaire (6) et le côté objectif (5), et avec au moins un trajet de rayon d'observation avec un axe optique, dans lequel les parties d'observation (3, 4) présentent une forme de base tubulaire ou de type tube et comprennent respectivement au moins un élément de raccordement (42, 43), les parties d'observation (3, 4) étant raccordées l'une à l'autre par l'élément de raccordement (42, 43) au moins au nombre de un et étant disposées l'une à côté de l'autre dans une position essentiellement parallèle et à une distance réglable l'une par rapport à l'autre, les axes longitudinaux (40, 41) des parties d'observation (3, 4) dans la zone des côtés oculaires (6) étant, en position d'utilisation, agencés à une distance (47) entre eux d'au moins 54 mm, et les deux axes longitudinaux (40, 41) formant un plan de référence (49), et au moins une des deux parties d'observation (3, 4) à distance l'une de l'autre présentant sur un côté extérieur (48), en plus de l'élément de raccordement (42, 43) au moins au nombre de un et à distance de l'élément de raccordement (42, 43), au moins un élargissement de boîtier (36), l'élargissement de boîtier (36) dépassant radialement de la forme de base tubulaire ou de type tube de la partie d'observation (3, 4) et constituant, sur un côté intérieur tourné vers l'axe longitudinal (40, 41), un espace de réception (59) pour un système de déviation de rayons qui comprend un prisme, et le prisme étant disposé dans l'espace de réception (59), et l'élargissement de boîtier (36) s'étendant à l'intérieur d'un tronçon partiel avec une étendue longitudinale (75) dans une limite inférieure de 20 % et une limite supérieure de 80 % d'une longueur totale (51) de la partie d'observation (3, 4) ou de l'appareil de téléoptique entre une extrémité (52) côté oculaire et une extrémité (53) côté objectif de telle sorte que pour chaque section transversale choisie à l'intérieur du tronçon partiel (75), par rapport à l'axe longitudinal (40, 41) de la partie d'observation (3, 4), un point superficiel de l'élargissement de boîtier (36) espacé au maximum de l'axe optique de l'objectif (5) a une distance normale à l'axe optique de l'objectif (5) qui se situe entre une limite inférieure de 130 % et une limite supérieure de 250 % d'un rayon (54) d'une lentille (55) de l'objectif (5), l'élargissement de boîtier (36) se trouvant sur un côté, éloigné de l'autre partie d'observation (4), d'une tangente (50) adjacente au côté extérieur (48) de la partie d'observation (3, 4) pour une distance (47) des axes longitudinaux (40, 41) des parties d'observation (3, 4) dans la zone des côtés oculaires (6) de 62 mm, tangente qui est disposée sur le côté de la partie d'observation (3, 4) qui est tourné vers l'autre partie d'observation (4, 3) et qui est orientée perpendiculairement au plan de référence (49).

2. Appareil de téléoptique, en particulier appareil d'observation (1), avec au moins deux parties d'observation (3, 4) qui comprennent respectivement des parties de boîtier (38, 39) avec un côté oculaire (6) et un côté objectif (5), un axe longitudinal (40, 41) de la partie d'observation (3, 4) s'étendant entre le côté oculaire (6) et le côté objectif (5), et avec au moins un trajet de rayon d'observation avec un axe optique, dans lequel les parties d'observation (3, 4) présentent une forme de base tubulaire ou de type tube et comprennent respectivement au moins un élément de raccordement (42, 43), les parties d'observation (3, 4) étant raccordées l'une à l'autre par l'élément de raccordement (42, 43) au moins au nombre de un et étant disposées l'une à côté de l'autre dans une position essentiellement parallèle et à une distance réglable l'une par rapport à l'autre de façon pivotante angulairement l'une par rapport à l'autre autour d'un axe de pivotement (44), et leur position étant variable l'une par rapport à l'autre ou respectivement également par rapport à l'axe de pivotement (44), au moins une des deux parties d'observation (3, 4) distantes l'une de l'autre présentant sur un côté extérieur (48), en plus de l'élément de raccordement (42, 43) au moins au nombre de un et à distance de l'élément de raccordement (42, 43), au moins un élargissement de boîtier (36), l'élargissement de boîtier (36) dépassant radialement de la forme de base tubulaire ou de type tube de la partie d'observation (3, 4) et constituant, sur un côté intérieur tourné vers l'axe longitudinal (40, 41), un espace de réception (59) pour un système de déviation de rayon qui comprend un prisme, et le prisme étant disposé dans l'espace de réception (59), et l'élargissement de boîtier (36) s'étendant à l'intérieur d'un tronçon partiel avec une étendue longitudinale dans une limite inférieure de 20 % et une limite supérieure de 80 % d'une longueur totale (51) de la partie d'observation (3, 4) ou de l'appareil de téléoptique entre une extrémité (52) côté oculaire et une extrémité (53) côté objectif de telle sorte que pour chaque section transversale choisie à l'intérieur du tronçon partiel (75), par rapport à l'axe longitudinal (40, 41) de la partie d'observation (3, 4), un point superficiel de l'élargissement de boîtier (36) espacé au maximum de l'axe optique de l'objectif (5) présente une distance normale à l'axe optique de l'objectif (5) dont la valeur, rapportée à un rayon (54) d'une lentille (55) de l'objectif (5), se situe entre une limite inférieure de 130 % et une limite supérieure de 250%, et en ce que l'élargissement de boîtier (36) est situé dans une zone, éloignée de l'axe de pivotement (44), d'une tangente (73, 74) adjacente au côté extérieur (48) de la partie d'observation (3, 4), la tangente (73, 74) étant orientée perpendiculairement à un plan (71, 72) formé par l'axe longitudinal (40, 41) et l'axe de pivotement (44) tout en étant adjacente au côté extérieur (48) de la partie d'observation (3, 4) tourné vers l'axe de pivotement (44).

3. Appareil de téléoptique selon la revendication 1 ou 2, **caractérisé en ce que**, en section transversale, par rapport à l'axe longitudinal (40, 41) de la partie d'observation (3, 4), de façon périphérique sur la partie d'observation (3, 4), l'élargissement de boîtier (36) s'étend dans une limite inférieure de 5° et une limite supérieure de 270°.

4. Appareil de téléoptique selon l'une des revendications précédentes, **caractérisé en ce que** l'élargissement de boîtier (36) présente une épaisseur de paroi (57) qui correspond à peu près à une épaisseur de paroi (58) de la partie de boîtier (38, 39).

5. Appareil de téléoptique selon l'une des revendications précédentes, **caractérisé en ce que** l'élargissement de boîtier (36) fait partie intégrante de la partie de boîtier (38, 39).

6. Appareil de téléoptique selon l'une des revendications 1 à 4, **caractérisé en ce que** l'élargissement de boîtier (36) est formé par un composant de boîtier (60) séparé et pouvant être accouplé à la partie de boîtier (38, 39).

7. Appareil de téléoptique selon la revendication 6, **caractérisé en ce qu'**un raccordement enfichable (62) est disposé entre le composant de boîtier (60), pouvant être accouplé, de l'élargissement de boîtier (36) et la partie de boîtier (38, 39).

8. Appareil de téléoptique selon l'une des revendications précédentes, **caractérisé en ce que**, en coupe longitudinale, par rapport à l'axe longitudinal (40, 41) de la partie d'observation (3, 4), l'élargissement de boîtier (36) présente une section transversale constituée à la façon d'un coin.

9. Appareil de téléoptique selon l'une des revendications précédentes, **caractérisé en ce qu'**au moins quelques-uns des composants du groupe équipement de mesure de distance, système de navigation tel que GPS (Global Positioning System), moyen de télétransmission tel que W-LAN, Bluetooth, infrarouge, laser et radio, dispositif de production d'énergie, dispositif de stockage d'énergie, accumulateur d'énergie, appareils d'imagerie thermique et équipements de communication mobiles, sont introduits dans l'espace de réception (59).

10. Appareil de téléoptique selon l'une des revendications précédentes, **caractérisé en ce qu'**une interface de communication et/ou une connexion pour un équipement d'alimentation en énergie est disposée sur l'élargissement de boîtier (36).

11. Appareil de téléoptique selon l'une des revendications précédentes, **caractérisé en ce qu'**au moins un moyen d'éclairage (64) est disposé sur l'élargissement de boîtier (36).

12. Appareil de téléoptique selon l'une des revendications précédentes, **caractérisé en ce qu'**un élément d'affichage (65) destiné à la représentation d'au moins une valeur du groupe coordonnées de position, température, intensité d'éclairage, pression d'air, humidité, niveau de la mer, affichage de boussole, affichage d'état de charge, est constitué sur l'élargissement de boîtier (36).

13. Appareil de téléoptique selon l'une des revendications précédentes, **caractérisé en ce qu'**un creux pour le pouce (37) est constitué entre l'élargissement de boîtier (36) et le côté oculaire (6) sur la partie d'observation (3, 4).

14. Appareil de téléoptique selon la revendication 13, **caractérisé en ce que** le creux pour le pouce (37), en coupe longitudinale, par rapport à l'axe longitudinal (40, 41) de la partie d'observation (3, 4), s'étend dans l'intérieur de la section transversale de la partie de boîtier (38, 39) constituée sous forme tubulaire.

15. Appareil de téléoptique selon l'une des revendications précédentes, **caractérisé en ce que** la partie d'observation (3, 4), en particulier sa partie de boîtier (38, 39), présente de façon continue quasiment une épaisseur de paroi (58) uniforme dans une limite inférieure de 0,5 mm et une limite supérieure de 1,5 mm.

16. Appareil de téléoptique selon l'une des revendications précédentes, **caractérisé en ce que** l'élément de raccordement (42, 43) est formé par des parties formant pont articulées (45, 46), et les parties formant pont articulées (45, 46), font respectivement partie intégrante de la partie d'observation (3, 4).

17. Appareil de téléoptique selon l'une des revendications 1 à 15, **caractérisé en ce que** l'élément de raccordement (42, 43) est constitué de parties formant pont articulées (66, 67) télescopiques dans une direction perpendiculaire par rapport à l'axe longitudinal (40, 41) de la partie d'observation (3, 4).

18. Appareil de téléoptique selon l'une des revendications précédentes, **caractérisé en ce que** la partie d'observation (3, 4) est formée d'un matériau en métal léger tel que du magnésium ou d'un alliage contenant du magnésium.

19. Appareil de téléoptique selon l'une des revendications 1 à 17, **caractérisé en ce que** la partie d'observation (3, 4) est formée d'une matière plastique renforcée de fibres, quelques-unes des fibres étant choisies dans le groupe fibres de verre, fibres d'aramide, fibres de carbone, fibres métalliques, fibres de céramique, fibres de polyimide.

20. Appareil de téléoptique selon l'une des revendications précédentes, **caractérisé en ce que** la partie d'observation (3, 4), en particulier sa partie de boîtier (38, 39), présente sur son côté oculaire (6) une position libre (69), qui est orientée à partir de côtés, tournés les uns vers les autres, des parties d'observation (3, 4) vers la direction éloignée de l'élément de raccordement (42, 43) et de façon inclinée en direction du côté objectif (5).

21. Appareil de téléoptique selon la revendication 13, **caractérisé en ce que** le centre de gravité de l'appareil d'observation (1), vu en coupe longitudinale, par rapport à l'axe longitudinal (40, 41), est disposé dans un tronçon longitudinal (76) qui correspond au tronçon du creux pour le pouce (37) dans la même direction.

22. Appareil de téléoptique selon l'une des revendications précédentes, **caractérisé en ce que** la partie d'observation (3, 4) comprend une interface (70) destinée à l'accouplement avec une arme à feu.
